(19) Europäisches Patentamt
European Patent Office
Office européen des brevets

(11) **EP 4 404 018 A1**

(12) **EUROPEAN PATENT APPLICATION**
published in accordance with Art. 153(4) EPC

(43) Date of publication:
**24.07.2024 Bulletin 2024/30**

(21) Application number: **21960322.2**

(22) Date of filing: **15.10.2021**

(51) International Patent Classification (IPC):
***G05D 1/02*** (2020.01)

(52) Cooperative Patent Classification (CPC):
**G05D 1/02**

(86) International application number:
**PCT/CN2021/124206**

(87) International publication number:
**WO 2023/060592 (20.04.2023 Gazette 2023/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventor: **ZHAO, Xiaowen
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **POSITIONING METHOD AND DEVICE**

(57)    This application relates to the field of positioning technologies and discloses a positioning method and apparatus, to improve positioning precision and stability. The method includes: obtaining a grid map corresponding to a first environment and a local grid corresponding to a second environment in the first environment; obtaining a first matching probability between the local grid and a grid on the grid map when the local grid is located at a different location on the grid map; and determining a location of a to-be-positioned apparatus based on the first matching probability. The grid map includes a plurality of first grids. The first grid includes a plurality of points, location information of each of the plurality of points, and attribute information of the first grid. The local grid includes at least one second grid, and the second grid includes a plurality of points and attribute information of the second grid. The attribute information includes semantic information and height information.

| A positioning apparatus obtains a grid map corresponding to a first environment | S301 |
| The positioning apparatus obtains a local grid corresponding to a second environment | S302 |
| The positioning apparatus obtains a first matching probability | S303 |
| The positioning apparatus determines a location of a to-be-positioned apparatus based on the first matching probability | S304 |

FIG. 3

**Description**

**TECHNICAL FIELD**

This application relates to the field of positioning technologies, and in particular, to a positioning method and apparatus.

**BACKGROUND**

With continuous development of computer technologies and internet technologies, extensive attention is paid to intelligent driving. Intelligent driving includes assisted driving and autonomous driving. Key technologies in the assisted driving and the autonomous driving include positioning, perception, planning and decision-making, control, and the like. High-precision positioning may provide a reliable basis for planning and decision-making or control. Therefore, the high-precision positioning plays an indispensable role in the intelligent driving.

At present, positioning is mainly performed by using a global positioning system (global positioning system, GPS). However, when a GPS signal is blocked or a positioning environment is complex, a large positioning error is generated through GPS positioning, and consequently a positioning result with high precision and high stability cannot be provided.

**SUMMARY**

Embodiments of this application provide a positioning method and apparatus, to improve positioning precision and stability.

To achieve the foregoing objective, the following technical solutions are used in embodiments of this application.

According to a first aspect, a positioning method is provided. The method includes: obtaining a grid map corresponding to a first environment; obtaining a local grid corresponding to a second environment; obtaining a first matching probability between the local grid and a grid on the grid map when the local grid is located at a different location on the grid map; and determining a location of a to-be-positioned apparatus based on the first matching probability.

The grid map includes a plurality of first grids, and any first grid includes a plurality of points, location information of the plurality of points, and attribute information of the first grid. The attribute information of the first grid includes semantic information of the first grid and height information of the first grid, the semantic information of the first grid indicates a probability that the first grid represents each of a plurality of types of objects, and the height information of the first grid indicates a height of the point included in the first grid. The second environment is included in the first environment, the local grid includes at least one second grid, any second grid includes a plurality of points and attribute information of the second grid, the attribute information of the second grid includes semantic information of the second grid and height information of the second grid, the semantic information of the second grid indicates a probability that the second grid represents each of a plurality of types of objects, and the height information of the second grid indicates a height of the point included in the second grid. The to-be-positioned apparatus is located in the second environment.

According to the positioning method provided in the first aspect, a positioning apparatus may obtain the grid map corresponding to the first environment, obtain the local grid corresponding to the second environment information, and perform positioning on the to-be-positioned apparatus with reference to a plurality of types of attribute information of the first grid and a plurality of types of attribute information of the second grid, so that positioning accuracy and stability are improved.

In a possible implementation, the attribute information of the first grid further includes reflection strength information of the first grid, and the reflection strength information of the first grid indicates reflection strength of the point included in the first grid; and the attribute information of the second grid further includes reflection strength information of the second grid, and the reflection strength information of the second grid indicates reflection strength of the point included in the second grid. According to the foregoing method, the positioning apparatus may further perform positioning with reference to the reflection strength information of the first grid and the reflection strength information of the second grid, to further improve positioning accuracy and stability.

In a possible implementation, the method further includes: predicting, based on pose information of the to-be-positioned apparatus at a first moment and a movement parameter of the to-be-positioned apparatus, a first area corresponding to a location of the to-be-positioned apparatus at a second moment. According to the foregoing method, the positioning apparatus may predict the location of the to-be-positioned apparatus at the second moment, to perform positioning on the to-be-positioned apparatus based on the predicted location.

In a possible implementation, the obtaining a first matching probability includes: obtaining the first matching probability between the local grid and the grid on the grid map when the local grid is located in a grid in the first area. According to the foregoing method, the positioning apparatus may not need to match a grid in the local grid with all grids on the grid map, but match the grid in the local grid with the grid in the first area, to reduce calculation overheads.

In a possible implementation, the obtaining the first matching probability between the local grid and the grid on the grid map when the local grid is located in a grid in the first area includes: obtaining, based on attribute information of a grid in the local grid and attribute information of the grid in the first area, a first matching probability corresponding to each type of attribute information of a first grid in the first area. According to the foregoing method, the positioning apparatus may determine, based on the attribute information of the first grid and the attribute information of the second grid, the first matching probability corresponding to each type of attribute information of the first grid in the first area, to perform positioning on the to-be-positioned apparatus based on the first matching probability, so that the positioning apparatus does not rely on only one specific attribute to perform positioning, and positioning accuracy and stability are improved.

In a possible implementation, the obtaining, based on attribute information of a grid in the local grid and attribute information of the grid in the first area, a first matching probability corresponding to first attribute information of the first grid in the first area includes: obtaining a first deviation between first attribute information of the second grid in the local grid and first attribute information of the first grid corresponding to the second grid when the local grid is located in the first grid in the first area, where the first attribute information of the second grid is any piece of attribute information in the attribute information of the second grid, and an attribute of the first attribute information of the first grid is the same as that of the first attribute information of the second grid; and obtaining, based on the first deviation, a first matching probability corresponding to the first attribute information of the first grid in the first area. According to the foregoing method, the positioning apparatus may match each second grid in the local grid with each first grid in the first area, to determine the first matching probability corresponding to the first attribute information of the first grid in the first area, so that positioning precision of the to-be-positioned apparatus is higher.

In a possible implementation, the determining a location of a to-be-positioned apparatus based on the first matching probability includes: determining, based on the first matching probability corresponding to each type of attribute information of the first grid in the first area, location information corresponding to each type of attribute information; and determining the location of the to-be-positioned apparatus based on the location information corresponding to each type of attribute information. According to the foregoing method, the positioning apparatus may obtain, based on the first matching probability corresponding to each type of attribute information of the first grid in the first area, the location information corresponding to each type of attribute information, and obtain the location of the to-be-positioned apparatus based on the location information, to perform positioning on the to-be-positioned apparatus.

In a possible implementation, the determining a location of a to-be-positioned apparatus based on the first matching probability further includes: determining, in the location information corresponding to each type of attribute information, location information corresponding to at least one type of attribute information that meets a preset rule; and the determining the location of the to-be-positioned apparatus based on the location information corresponding to each type of attribute information includes: if a quantity of the at least one type of attribute information is greater than 1, performing weighted summation on the location information corresponding to the at least one type of attribute information, to obtain the location of the to-be-positioned apparatus; or if a quantity of the at least one type of attribute information is equal to 1, determining the location information corresponding to the at least one type of attribute information as the location of the to-be-positioned apparatus. According to the foregoing method, after determining the location information corresponding to each type of attribute information, the positioning apparatus may first screen the location information, remove inaccurate location information, and then determine the location of the to-be-positioned apparatus based on screened location information, so that the positioning apparatus performs positioning on the to-be-positioned apparatus more accurately.

In a possible implementation, the method further includes: obtaining a second matching probability, where the second matching probability is a matching probability between the local grid and the grid on the grid map when the local grid is located at the location of the to-be-positioned apparatus and the local grid is rotated by a different angle; and determining an orientation angle of the to-be-positioned apparatus based on the second matching probability. According to the foregoing method, the positioning apparatus may determine the orientation angle of the to-be-positioned apparatus, namely, a movement direction of the to-be-positioned apparatus.

In a possible implementation, the method further includes: predicting an orientation angle of the to-be-positioned apparatus at the second moment based on an orientation angle of the to-be-positioned apparatus at a third moment and the movement parameter of the to-be-positioned apparatus. According to the foregoing method, the positioning apparatus may predict the orientation angle of the to-be-positioned apparatus at the second moment, to determine the orientation angle of the to-be-positioned apparatus based on the predicted orientation angle.

In a possible implementation, the obtaining a second matching probability includes: obtaining second matching probabilities of a plurality of rotation angles corresponding to the local grid when the local grid is located at the location of the to-be-positioned apparatus, where an included angle between each of the plurality of rotation angles and the predicted orientation angle of the to-be-positioned apparatus at the second moment is less than or equal to a first angle. According to the foregoing method, the positioning apparatus does not need to rotate the local grid by one circle to obtain the plurality of rotation angles, but rotates the local grids near the orientation angle at the second moment to obtain the plurality of rotation angles. In this way, calculation overheads of the positioning apparatus can be reduced, and precision of the determined orientation angle of the to-be-positioned apparatus can be improved.

In a possible implementation, the obtaining a second matching probability of a first rotation angle when the local grid is at the location of the to-be-positioned apparatus includes: obtaining, based on attribute information of a grid in a local grid corresponding to the first rotation angle and the attribute information of the grid on the grid map, a second matching probability corresponding to each type of attribute information of the first rotation angle, where the first rotation angle is any rotation angle of the plurality of rotation angles. According to the foregoing method, the positioning apparatus may determine, based on the attribute information of the first grid and the attribute information of the second grid, the second matching probability corresponding to each type of attribute information of the first rotation angle, to determine the orientation angle of the to-be-positioned apparatus based on the second matching probability, so that the positioning apparatus determines the orientation angle of the to-be-positioned apparatus not only by relying on one specific attribute, and accuracy of determining the orientation angle by the positioning apparatus is improved.

In a possible implementation, the obtaining, based on attribute information of a grid in a local grid corresponding to the first rotation angle and the attribute information of the grid on the grid map, a second matching probability corresponding to first attribute information of the first rotation angle includes: obtaining a second deviation between first attribute information of each second grid in the local grid and first attribute information of a first grid corresponding to the second grid when the local grid is located at the location of the to-be-positioned apparatus and the local grid is rotated by the first rotation angle, where the first attribute information of the second grid is any piece of attribute information in the attribute information of the second grid, and an attribute of the first attribute information of the first grid is the same as that of the first attribute information of the second grid; and obtaining, based on the second deviation, a second matching probability corresponding to first attribute information of the first rotation angle. According to the foregoing method, the positioning apparatus may match each second grid in the local grid with the first grid corresponding to the second grid at the first rotation angle, to determine the second matching probability corresponding to the first attribute information of the first rotation angle, so that the orientation angle determined by the positioning apparatus is more accurate.

In a possible implementation, the determining an orientation angle of the to-be-positioned apparatus based on the second matching probability includes: determining, based on a second matching probability corresponding to each type of attribute information of each rotation angle, orientation angle information corresponding to each type of attribute information; and performing weighted summation on the orientation angle information corresponding to each type of attribute information, to obtain the orientation angle of the to-be-positioned apparatus. According to the foregoing method, the positioning apparatus may obtain, based on the second matching probability corresponding to each type of attribute information of each rotation angle, the orientation angle information corresponding to each type of attribute information, and obtain the orientation angle of the to-be-positioned apparatus based on the orientation angle information, so that the positioning apparatus determines the movement direction of the to-be-positioned apparatus.

In a possible implementation, the obtaining a grid map corresponding to a first environment includes: obtaining information about a point cloud corresponding to the first environment, where the information about the point cloud corresponding to the first environment indicates location information of a point in the point cloud corresponding to the first environment; and obtaining, based on the information about the point cloud corresponding to the first environment, the grid map corresponding to the first environment. According to the foregoing method, the positioning apparatus may obtain the grid map corresponding to the first environment.

In a possible implementation, the information about the point cloud corresponding to the first environment further indicates reflection strength of the point in the point cloud corresponding to the first environment. According to the foregoing method, the positioning apparatus may obtain the reflection strength information of the first grid based on the information about the point cloud corresponding to the first environment.

In a possible implementation, the obtaining a local grid corresponding to a second environment includes: obtaining information about a point cloud corresponding to the second environment, where the information about the point cloud corresponding to the second environment indicates location information of a point in the point cloud corresponding to the second environment; and obtaining, based on the information about the point cloud corresponding to the second environment, the local grid corresponding to the second environment. According to the foregoing method, the positioning apparatus may obtain the local grid corresponding to the second environment.

In a possible implementation, the information about the point cloud corresponding to the second environment further indicates reflection strength of the point in the point cloud corresponding to the second environment. The positioning apparatus may obtain the reflection strength information of the second grid based on the information about the point cloud corresponding to the second environment.

According to a second aspect, a positioning apparatus is provided, to implement the foregoing method. The positioning apparatus may be the positioning apparatus in the first aspect, or an apparatus including the positioning apparatus. The positioning apparatus includes a corresponding module, unit, or means (means) for implementing the foregoing method. The module, the unit, or the means may be implemented by hardware or software, or implemented by hardware by executing corresponding software. The hardware or the software includes one or more modules or units corresponding to the foregoing function.

According to a third aspect, a positioning apparatus is provided. The positioning apparatus includes a processor. The processor is configured to: after being coupled to a memory and reading instructions in the memory, perform the method in the first aspect according to the instructions. The positioning apparatus may be the positioning apparatus in the first aspect, or an apparatus including the positioning apparatus.

With reference to the third aspect, in a possible implementation, the positioning apparatus further includes the memory. The memory is configured to store necessary program instructions and data.

With reference to the third aspect, in a possible implementation, the positioning apparatus is a chip or a chip system. Optionally, when the positioning apparatus is a chip system, the positioning apparatus may include a chip, or may include a chip and another discrete device.

According to a fourth aspect, a positioning apparatus is provided. The positioning apparatus includes a processor and an interface circuit. The interface circuit is configured to: receive a computer program or instructions, and transmit the computer program or the instructions to the processor. The processor is configured to execute the computer program or the instructions, so that the positioning apparatus performs the method in the first aspect.

With reference to the fourth aspect, in a possible implementation, the positioning apparatus is a chip or a chip system. Optionally, when the positioning apparatus is a chip system, the positioning apparatus may include a chip, or may include a chip and another discrete device.

According to a fifth aspect, a computer-readable storage medium is provided. The computer-readable storage medium stores instructions. When the instructions are run on a computer, the computer is enabled to perform the method in the first aspect.

According to a sixth aspect, a computer program product including instructions is provided. When the computer program product runs on a computer, the computer is enabled to perform the method in the first aspect.

For technical effects brought by any possible implementation of the second aspect to the sixth aspect, refer to technical effects brought by different possible implementations of the first aspect or any aspect. Details are not described herein again.

**BRIEF DESCRIPTION OF DRAWINGS**

FIG. 1A is a schematic diagram 1 of an architecture of a positioning system according to an embodiment of this application;
FIG. 1B is a schematic diagram 2 of an architecture of a positioning system according to an embodiment of this application;
FIG. 2 is a schematic diagram of a hardware structure of a positioning apparatus according to an embodiment of this application;
FIG. 3 is a schematic flowchart 1 of a positioning method according to an embodiment of this application;
FIG. 4 is a schematic diagram 1 of a grid map and a local grid according to an embodiment of this application;
FIG. 5 is a schematic flowchart 2 of a positioning method according to an embodiment of this application;
FIG. 6 is a schematic diagram of an angular velocity of a to-be-positioned apparatus, a linear velocity of the to-be-positioned apparatus, and a rotation angle of the to-be-positioned apparatus according to an embodiment of this application;
FIG. 7 is a schematic diagram 2 of a grid map and a local grid according to an embodiment of this application;
FIG. 8 is a schematic flowchart 3 of a positioning method according to an embodiment of this application;
FIG. 9 is a schematic diagram 3 of a grid map and a local grid according to an embodiment of this application;
FIG. 10 is a schematic flowchart 4 of a positioning method according to an embodiment of this application;
FIG. 11 is a schematic flowchart 5 of a positioning method according to an embodiment of this application;
FIG. 12 is a schematic diagram of a location of a to-be-positioned apparatus according to an embodiment of this application; and
FIG. 13 is a schematic diagram of a structure of a positioning apparatus according to an embodiment of this application.

**DESCRIPTION OF EMBODIMENTS**

First, to facilitate understanding of technical solutions provided in embodiments of this application, technical terms used in embodiments of this application are explained and described.

1. Simultaneous localization and mapping (simultaneous localization and mapping, SLAM)

SLAM may refer to localization and mapping, or concurrent localization and mapping. Specifically, a map obtaining apparatus (for example, a robot) may be placed at an unknown location in an unknown environment, so that the map obtaining apparatus gradually depicts a map of the environment while moving based on surrounding environment information and location information of the map obtaining apparatus at each moment.

2. Iterative closest point (iterative closest point, ICP)

An ICP algorithm may determine, in a source point cloud set based on a specific constraint condition, a point set Qi that is closest to a point set Pi in a target point cloud set, and calculate a rotation matrix R and a translation matrix T, to minimize an error function; perform rotation and translation transformation on Pi by using R and T, to obtain a new point $P_i'$; and calculate an average distance d between $P_i'$ and Qi, and if d is less than a threshold, or a quantity of times of iteratively calculating the rotation matrix and the translation matrix is greater than a maximum quantity of iterations, stop calculation; otherwise, re-determine, in the source point cloud set, the point set $Q_i'$ that is closest to the point set Pi in the target point cloud set, and continue to iteratively calculate the rotation matrix and the translation matrix, until an obtained average distance is less than a threshold, or the quantity of times of iteratively calculating the rotation matrix and the translation matrix is greater than the maximum quantity of iterations.

3. Lidar odometer and mapping

Lidar odometer and mapping is an algorithm to realize SLAM by using lidar. A location of a robot relative to an initial moment is calculated by matching a point cloud of the lidar, which is referred to as the lidar odometer. Point clouds are combined based on locations to form a map, which is referred to as mapping.

4. Point cloud library (point cloud library, PCL)

PCL is a large-scale cross-platform open-source C++ programming library built on the basis of previous research on the point cloud. PCL implements a large quantity of point cloud related general algorithms and efficient data structures, involving point cloud acquisition, filtering, segmentation, registration, retrieval, feature extraction, identification, tracking, surface reconstruction, visualization, and the like. PCL supports a plurality of operating systems, for example, Windows, Linux, Android, Mac OS X, and some embedded real-time systems.

5. PointNet

PointNet is a new deep learning model for processing point cloud data. PointNet can be used for a plurality of cognitive tasks of point cloud data, such as classification, semantic segmentation, and target identification.
As described in the background, when a GPS signal is blocked or a positioning environment is complex, a large positioning error is generated through GPS positioning, and consequently a positioning result with high precision and high stability cannot be provided. To resolve this problem, the following methods can be used to perform positioning, to improve accuracy and stability of positioning.

Method 1: Positioning by using the ICP algorithm

In Method 1, the ICP algorithm may be used to match a point cloud (which may be equivalent to Pi above) obtained by the lidar in real time with a point cloud (which may be equivalent to the foregoing point set that is closest to the point set Pi in the target point cloud set) in a pre-established point cloud map, to determine a real-time location.

Method 2: Positioning method based on feature information and a grid map

In Method 2, a local grid may be obtained based on information about a point cloud (for example, location information of a point cloud and feature information of the point cloud) obtained by the lidar in real time, and feature information of each grid in the local grid is matched with feature information of a point cloud on a pre-stored grid map, to complete positioning. The feature information of the point cloud may include height information. The pre-stored grid map is obtained based on information about a point cloud that is obtained by the lidar from an environment corresponding to the grid map.

Method 3: Positioning method based on category information and a grid map

In Method 3, a local grid may be obtained based on location information of a point cloud that is obtained by the lidar in real time, image information corresponding to the point cloud is obtained through a visual sensor, an object in the image information is identified, category information corresponding to the object is obtained, and the category information is stored in the local grid; and then category information of each grid in the local grid is matched with category information of each grid on a pre-stored grid map, to complete positioning. The pre-stored grid map is obtained based on information about a point cloud that is obtained by the lidar from an environment corresponding to the grid map and image information that is obtained by the visual sensor from the environment corresponding to the grid map.

Method 4: Positioning method based on attribute information and a grid map

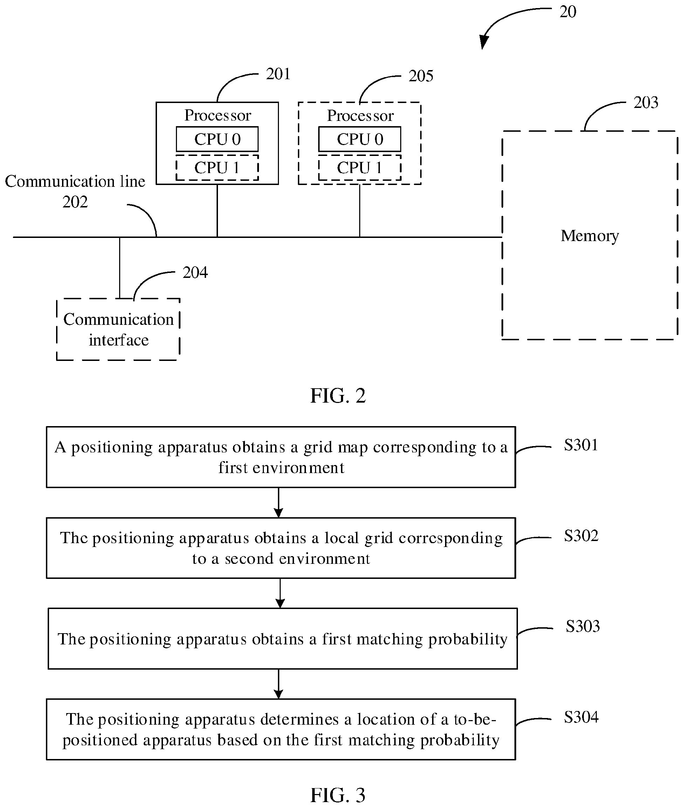

In Method 4, a grid map corresponding to a first environment may be obtained, and a local grid corresponding to second environment information may be obtained. The grid map includes a plurality of first grids. The first grid includes a plurality of points, location information of each of the plurality of points, and attribute information of the first grid. The attribute information of the first grid includes semantic information of the first grid and height information of the first grid. The second environment is included in the first environment, the local grid includes at least one second grid, and the second grid includes a plurality of points and attribute information of the second grid. The attribute information of the second grid includes semantic information of the second grid and height information of the second grid. Subsequently, a first matching probability between the local grid and a grid on the grid map may be obtained when the local grid is located at a different location on the grid map, and a location of a to-be-positioned apparatus is determined based on the first matching probability. Method 4 is described in the following embodiment shown in FIG. 3. Details are not described herein.

It may be understood that, although Method 1 above is simple to implement, in Method 1, only a minimum distance between points is considered, and an algorithm is easily converged to an incorrect location, that is, positioning is inaccurate. In Method 2 above, positioning is performed with reference to the feature information of the point cloud; and compared with Method 1, positioning precision is improved. However, if the feature information changes, positioning in Method 2 is inaccurate and stability is poor. In Method 3 above, positioning is performed with reference to the category information of the object; and compared with Method 1, positioning precision is improved. However, Method 3 usually depends on accuracy of identifying the object in the image information or the information about the point cloud. If accuracy of identifying the object is low, positioning is inaccurate. In Method 4 above, positioning may be performed with reference to the attribute information of the grid, for example, the height information of the grid and the semantic information of the grid; and compared with Method 1 to Method 3, accuracy and stability of positioning performed in Method 4 are higher.

It may be understood that, embodiments of this application provide a positioning method and apparatus, to perform positioning in a specific area. For example, the positioning method and apparatus may be used for positioning in an environment such as a residential district, an industrial park, or a park. Embodiments of this application provide the positioning method and apparatus, to improve positioning precision and stability.

The following describes a system architecture to which embodiments of this application may be applied.

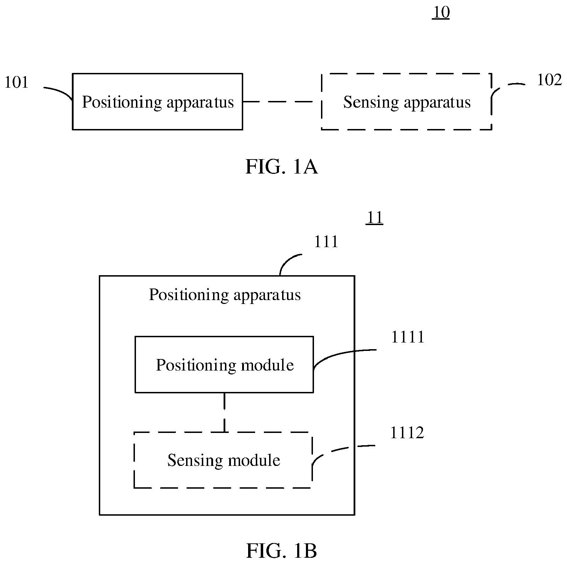

In a possible implementation, the system architecture to which embodiments of this application may be applied includes a positioning apparatus. Optionally, the system architecture further includes a sensing apparatus. The sensing apparatus may communicate with the positioning apparatus in a wired or wireless manner. For example, the system architecture may be shown in FIG. 1A. The system architecture 10 shown in FIG. 1A includes a positioning apparatus 101. Optionally, the system architecture 10 further includes a sensing apparatus 102.

The positioning apparatus may be configured to: obtain a grid map corresponding to a first environment, obtain a local grid corresponding to a second environment, obtain a first matching probability between the local grid and a grid on the grid map when the local grid is located at a different location on the grid map, and determine a location of a to-be-positioned apparatus based on the first matching probability. The grid map includes a plurality of first grids. Any first grid includes a plurality of points, location information of each of the plurality of points, and attribute information of the first grid. The attribute information of the first grid includes semantic information of the first grid and height information of the first grid. The second environment is included in the first environment, and the local grid includes at least one second grid. Any second grid includes a plurality of points and attribute information of the second grid. The attribute information of the second grid includes semantic information of the second grid and height information of the second grid.

In an example, the positioning apparatus may be a vehicle-mounted device or a computing device. For example, the positioning apparatus is a computer, a computing unit in a computer, an embedded device, an industrial computer of an x86 system, a wireless terminal in unmanned driving, or the like. The positioning apparatus may be a vehicle-mounted module, a vehicle-mounted module, a vehicle-mounted component, a vehicle-mounted chip, or a vehicle-mounted unit that is built in a vehicle as one or more components or units. The vehicle may implement a method in this application through the vehicle-mounted module, the vehicle-mounted module, the vehicle-mounted component, the vehicle-mounted chip, or the vehicle-mounted unit that is built in the vehicle.

The sensing apparatus may be configured to: obtain information about a point cloud corresponding to the first environment, and send the information about the point cloud to the positioning apparatus. The information about the point cloud corresponding to the first environment may indicate location information of a point in the point cloud corresponding to the first environment. Optionally, the information about the point cloud corresponding to the first environment may further indicate reflection strength of the point in the point cloud corresponding to the first environment. The sensing apparatus may be further configured to: obtain information about a point cloud corresponding to the second environment, and send the information about the point cloud to the positioning apparatus. The information about the point cloud corresponding to the second environment indicates location information of a point in the point cloud corresponding to the second environment. Optionally, the information about the point cloud corresponding to the second environment may further indicate reflection strength of the point in the point cloud corresponding to the second environment. In an example, the sensing apparatus may be lidar, or another apparatus that can obtain information about a point cloud corresponding to a specific environment.

In another possible implementation, the system architecture to which embodiments of this application may be applied includes a positioning apparatus. A positioning module may be deployed in the positioning apparatus. Optionally, a sensing module is further deployed in the positioning apparatus. For example, the system architecture may be shown in FIG. 1B. The system architecture 11 shown in FIG. 1B includes a positioning apparatus 111. A positioning module 1111 is deployed in the positioning apparatus 111. Optionally, a sensing module 1112 is further deployed in the positioning apparatus 111.

The positioning module may be configured to: obtain a grid map corresponding to a first environment, obtain a local grid corresponding to a second environment, obtain a first matching probability between the local grid and a grid on the grid map when the local grid is located at a different location on the grid map, and determine a location of a to-be-positioned apparatus based on the first matching probability. The sensing module may be configured to: obtain information about a point cloud corresponding to the first environment, and send the information about the point cloud to the positioning module. The sensing module may be further configured to: obtain information about a point cloud corresponding to the second environment, and send the information about the point cloud to the positioning module.

In an example, the positioning apparatus may be a device having a sensing function and a computing function. For example, the positioning apparatus is an intelligent vehicle, such as an unmanned vehicle, an automatic takeaway vehicle, or an automatic express delivery vehicle. The positioning module is a module having a computing function in the positioning apparatus, and the sensing module is a module having a sensing function in the positioning apparatus. For example, the positioning apparatus is an intelligent vehicle. The positioning module may be a vehicle-mounted computer or a computing unit in the vehicle-mounted computer in the intelligent vehicle, an embedded device in the intelligent vehicle, an industrial computer in the intelligent vehicle, a wireless terminal in the intelligent vehicle, or the like. The sensing module may be lidar in the intelligent vehicle, or another apparatus that can obtain information about a point cloud corresponding to a specific environment in the intelligent vehicle.

FIG. 1A and FIG. 1B are merely schematic diagrams, and do not constitute a limitation on an applicable scenario of the technical solutions provided in this application. A person skilled in the art should understand that, in a specific implementation process, the foregoing system architecture may alternatively include another device, and a quantity of positioning apparatuses, sensing apparatuses, positioning modules, or sensing modules may alternatively be determined based on a specific requirement. This is not limited.

Optionally, the apparatus (for example, the positioning apparatus) in FIG. 1A or FIG. 1B in embodiments of this application may be a general-purpose device or a dedicated device. This is not specifically limited in embodiments of this application.

Optionally, a related function of the apparatus (for example, the positioning apparatus) in FIG. 1A or FIG. 1B in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, or may be a software function running on dedicated hardware, a combination of hardware and software, or a virtualization function instantiated on a platform (for example, a cloud platform).

During specific implementation, the apparatus (for example, the positioning apparatus) in FIG. 1A or FIG. 1B in embodiments of this application may use a composition structure shown in FIG. 2, or include components shown in FIG. 2. FIG. 2 is a schematic diagram of a hardware structure of a positioning apparatus applicable to an embodiment of this application. The positioning apparatus 20 includes at least one processor 201, configured to implement the method provided in embodiments of this application. The positioning apparatus 20 may further include a communication line 202, a memory 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits that are configured to control execution of a program in the solutions in this application.

The communication line 202 may include a path, for example, a bus, for transmitting information between the foregoing components.

The communication interface 204 is configured to communicate with another device or a communication network. The communication interface 204 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 203 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer. However, this is not limited herein. The memory may exist independently, and is coupled to the processor 201 through the communication line 202. The memory 203 may alternatively be integrated with the processor 201. The memory provided in embodiments of this application may be usually non-volatile.

The memory 203 is configured to store computer-executable instructions for executing the solutions provided in embodiments of this application, and the processor 201 controls execution. The processor 201 is configured to execute the computer-executable instructions stored in the memory 203, to implement the method provided in embodiments of this application. Alternatively, optionally, in embodiments of this application, the processor 201 may perform processing-related functions in a method provided in the following embodiments of this application, and the communication interface 204 is responsible for communication with another device or a communication network. This is not specifically limited in embodiments of this application.

Optionally, the computer-executable instructions in embodiments of this application may also be referred to as application program code. This is not specifically limited in embodiments of this application.

The coupling in embodiments of this application is an indirect coupling or a communication connection between apparatuses, units, or modules, may be in an electrical form, a mechanical form, or another form, and is used for information exchange between the apparatuses, the units, or the modules.

In an embodiment, the processor 201 may include one or more CPUs, for example, a CPU 0 and a CPU 1 in FIG. 2.

In an embodiment, the positioning apparatus 20 may include a plurality of processors, for example, the processor 201 and a processor 207 in FIG. 2. Each of these processors may be a single-core (single-CPU) processor, or may be a multi-core (multi-CPU) processor. The processor herein may be one or more devices, circuits, and/or processing cores configured to process data (for example, computer program instructions).

It may be understood that the composition structure shown in FIG. 2 does not constitute a limitation on the positioning apparatus. In addition to the components shown in FIG. 2, the positioning apparatus may include more or fewer components than those shown in the figure, have some components combined, or have different component arrangements.

The following describes, with reference to the accompanying drawings, the positioning method provided in embodiments of this application. The positioning apparatus in the following embodiments may have components shown in FIG. 2. Details are not described.

It should be noted that the positioning method provided in embodiments of this application may be applied to a plurality of fields, for example, an unmanned driving field, an autonomous driving field, an assisted driving field, an intelligent driving field, a connected driving field, an intelligent connected driving field, and an automobile sharing field.

It should be noted that, in embodiments of this application, "/" may represent an "or" relationship between associated objects. For example, A/B may represent A or B. The term "and/or" may be used to represent that there are three relationships between associated objects. For example, A and/or B may represent the following three cases: Only A exists, both A and B exist, and only B exists, where A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

To facilitate description of the technical solutions in embodiments of this application, in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, the term such as "example" or "for example" is used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

It should be noted that in embodiments of this application, for a technical feature, "first", "second", "third", "A", "B", "C", and "D" are used to distinguish between technical features in the technical feature, and there is no sequential order or size order between the technical features described by "first", "second", "third", "A", "B", "C", and "D".

It may be understood that a same step or a step or a technical feature having a same function in embodiments of this application may be mutually referenced in different embodiments.

It may be understood that, in embodiments of this application, the positioning apparatus may perform some or all of steps in embodiments of this application. These steps are merely examples. In embodiments of this application, other steps or variations of various steps may be further performed. In addition, the steps may be performed in different sequences presented in embodiments of this application, and not all the steps in embodiments of this application need to be performed.

FIG. 3 shows a positioning method according to an embodiment of this application. The positioning method includes S301 to S304.

S301: A positioning apparatus obtains a grid map corresponding to a first environment.

The positioning apparatus may be the positioning apparatus 101 in FIG. 1A or the positioning apparatus 111 in FIG. 1B.

The first environment may be an environment in which a to-be-positioned apparatus is located. For example, the first environment is a residential district, an industrial park, or a park. The to-be-positioned apparatus is an apparatus that needs to be positioned, and the to-be-positioned apparatus may be the same as or different from the positioning apparatus. If the to-be-positioned apparatus is the same as the positioning apparatus, it indicates that the positioning apparatus needs to perform positioning on the positioning apparatus. If the to-be-positioned apparatus is different from the positioning apparatus, it indicates that the positioning apparatus needs to perform positioning on an apparatus other than the positioning apparatus.

The grid map is a two-dimensional map. The grid map includes a plurality of first grids. The first grids may be squares or rectangles. Alternatively, a part of grids in the plurality of first grids are squares, and the other part of grids are rectangles. This is not limited. A size of the first grid may be fixed, that is, may be pre-stored in the positioning apparatus, or may be set by a user as required. In this embodiment of this application, the grid may have another name. For example, the grid may also be referred to as a mesh, an area, or the like. This is not limited.

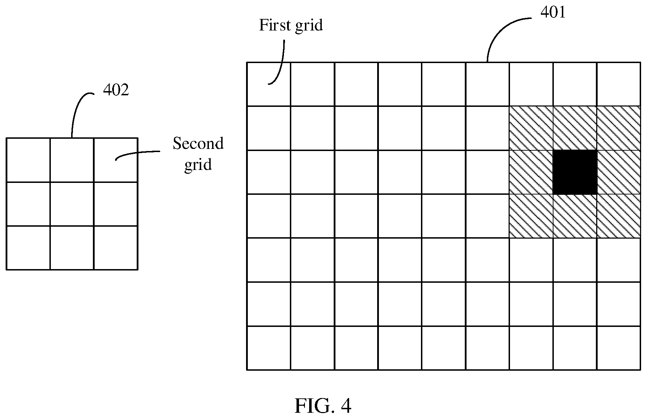

In an example, the grid map may be shown in FIG. 4. A grid map 401 in FIG. 4 includes 63 first grids. The first grid in the grid map 401 is a square.

In a possible implementation, any one of the plurality of first grids includes a plurality of points, location information of each of the plurality of points, and attribute information of the first grid.

The location information of the point may indicate a location of the point on the grid map. For example, the location information of the point includes a value x of a horizontal coordinate and a value y of a vertical coordinate of the point on the grid map, that is, (x, y).

In a possible implementation, the location information of each point included in the first grid may be presented in the first grid by distributing each point in the first grid at a different location in the first grid. For example, location information of a point 1 is (x1, y1), location information of a point 2 is (x2, y2), and the point 1 and the point 2 are located at different locations in the first grid.

The attribute information of the first grid may include semantic information of the first grid and height information of the first grid. Optionally, the attribute information of the first grid may further include reflection strength information of the first grid. The following describes each type of attribute information included in the attribute information of the first grid.

The semantic information of the first grid may indicate a probability that the first grid represents each of a plurality of types of objects. The probability that the first grid represents each of the plurality of types of objects may be understood as a probability that an object to which the point in the first grid belongs (or an object corresponding to the point in the first grid) is each of the plurality of types of objects. The plurality of types of objects may include at least two types of a tree, a parked vehicle, a wall, a ground, a building, a lawn, or another object. For example, the semantic information of the first grid may indicate a probability that the first grid represents a tree, a probability that the first grid represents a parked vehicle, a probability that the first grid represents a wall, a probability that the first grid represents a ground, a probability that the first grid represents a lawn, and a probability that the first grid represents another object. In other words, the semantic information of the first grid may indicate a probability that the object to which the point in the first grid belongs is a tree, a probability that the object to which the point in the first grid belongs is a parked vehicle, a probability that the object to which the point in the first grid belongs is a wall, a probability that the object to which the point in the first grid belongs is a ground, a probability that the object to which the point in the first grid belongs is a lawn, and a probability that the object to which the point in the first grid belongs is another object.

In an example, the semantic information of the first grid includes the probability that the first grid represents each of the plurality of types of objects. For example, the plurality of types of objects include a tree, a parked vehicle, a building, and another object. If a probability that the first grid represents the tree is 0.95, a probability that the first grid represents the parked vehicle is 0.02, a probability that the first grid represents the building is 0.01, and a probability that the first grid represents the another object is 0.02, the semantic information of the first grid includes {0.95, 0.02, 0.01, 0.02}.

In another example, the semantic information of the first grid includes label information of each of the plurality of types of objects, and the probability that the first grid represents each of the plurality of types of objects. For example, the plurality of types of objects include a tree, a parked vehicle, a building, and another object. If a probability that the first grid represents the tree is 0.95, a probability that the first grid represents the parked vehicle is 0.02, a probability that the first grid represents the building is 0.01, and a probability that the first grid represents the another object is 0.02, the semantic information of the first grid includes {tree: 0.95; parked vehicle: 0.02; building: 0.01; another object: 0.02}, or the semantic information of the first grid includes {tree, 0.95}; {parked vehicle: 0.02}; {building: 0.01}; and {another object: 0.02}.

In a possible implementation, the semantic information of the first grid may be presented in the first grid by using a color attribute parameter of the point in the first grid. The color attribute parameter includes at least one of grayscale, saturation, brightness, or a hue. For example, the color attribute parameter includes grayscale. Each of the plurality of types of objects may correspond to one grayscale value, a grayscale value of the point in the first grid is a grayscale value corresponding to a first object, and the first object is an object with a highest probability in probabilities that the first grid represents all the plurality of types objects.

In an example, the plurality of types of objects include a tree, a parked vehicle, a building, and another object, a grayscale value corresponding to the tree is 1, a grayscale value corresponding to the parked vehicle is 2, a grayscale value corresponding to the building is 3, and a grayscale value corresponding to the another object is 4. If a probability that the first grid represents the tree is 0.95, a probability that the first grid represents the parked vehicle is 0.02, a probability that the first grid represents the building is 0.01, and a probability that the first grid represents the another object is 0.02, the object with the highest probability in the probabilities that the first grid represents all the plurality of types of objects is the tree. Therefore, the grayscale value of the point in the first grid is the grayscale value 1 corresponding to the tree.

The height information of the first grid may indicate a height of the point included in the first grid. For example, the height information of the first grid includes an average value of heights of all points included in the first grid. The

$$\overline{h} = \frac{\sum_{a=1}^{N} z_a}{N}$$

average value of the heights of all the points included in the first grid is , $z_a$ is a height of an $a^{th}$ point in all the points included in the first grid, and N is a quantity of all the points included in the first grid.

In a possible implementation, the height information of the first grid may be presented in the first grid by using a color attribute parameter of the point in the first grid. For example, the color attribute parameter includes brightness. The heights may be divided into a plurality of height intervals, any two height intervals include different height values, and each height interval corresponds to one brightness value. In this case, the brightness corresponding to the point in the first grid is brightness corresponding to a height interval to which the height of the point belongs.

The reflection strength information of the first grid may indicate reflection strength of the point included in the first grid, for example, reflectivity of a surface of an object to which the point belongs. For example, the reflection strength information of the first grid includes an average value of reflection strength of all points included in the first grid. The

$$\overline{A} = \frac{\sum_{a=1}^{N} A_a}{N}$$

average value of the reflection strength of all the points included in the first grid is , and $A_a$ is reflection strength of an $a^{th}$ point in all the points included in the first grid.

In a possible implementation, the reflection strength information of the first grid may be presented in the first grid by using a color attribute parameter of the point in the first grid. For example, the color attribute parameter includes a hue. The reflection strength may be divided into a plurality of reflection strength intervals, any two reflection strength intervals include different reflection strength values, and each reflection strength interval corresponds to one hue. In this case, the hue corresponding to the point in the first grid is a hue corresponding to a reflection strength interval to which the reflection strength of the point belongs.

In a possible implementation, the positioning apparatus may obtain, in at least the following two example manners, the grid map corresponding to the first environment.

Manner 1: The positioning apparatus obtains information about a point cloud corresponding to the first environment, and obtains, based on the information about the point cloud corresponding to the first environment, the grid map corresponding to the first environment.

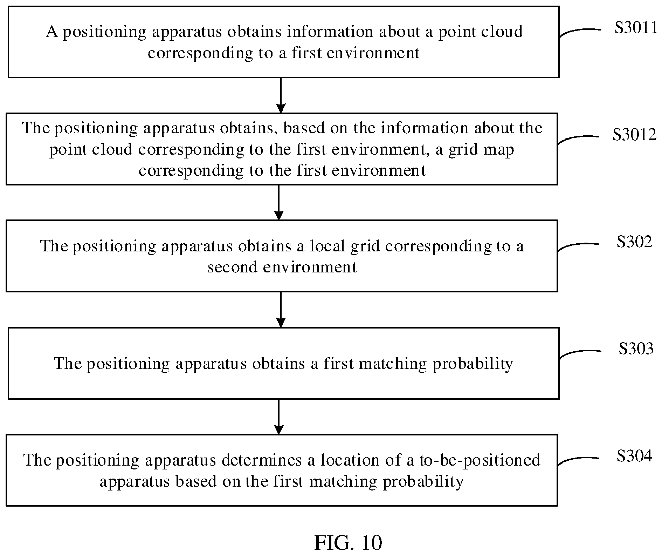

The information about the point cloud corresponding to the first environment may indicate location information of a point in the point cloud corresponding to the first environment. Optionally, the information about the point cloud corresponding to the first environment may further indicate reflection strength of the point in the point cloud corresponding to the first environment. A specific process of Manner 1 is described in a subsequent method shown in FIG. 10. Details are not described herein.

Manner 2: The positioning apparatus locally obtains the grid map corresponding to the first environment.

In an example, the grid map corresponding to the first environment is locally stored. For example, after obtaining the grid map from another apparatus, the positioning apparatus locally stores the grid map. For another example, after obtaining the grid map in Manner 1 above, the positioning apparatus locally stores the grid map. Subsequently, when the grid map needs to be used, the positioning apparatus locally obtains the grid map corresponding to the first environment.

S302: The positioning apparatus obtains a local grid corresponding to a second environment.

The second environment is included in the first environment. That is, the second environment is a part of the first environment. The second environment is a surrounding environment of a current location of the to-be-positioned apparatus. That is, the to-be-positioned apparatus is in the second environment.

For example, the first environment is a residential district. The second environment may be a north side of a building 2 in the residential district. For example, the first environment is an industrial park. The second environment may be in front of an office building in the industrial park. For example, the first environment is a park. The second environment may be under a rockery in the park.

The local grid may include at least one second grid. The second grid may be a square or a rectangle. Alternatively, a part of grids in the at least one second grid are squares, and the other part of grids are rectangles. This is not limited. A size of the second grid may be fixed, that is, may be pre-stored in the positioning apparatus, or may be set by the user as required.

In an example, the local grid may be shown in FIG. 4. A local grid 402 in FIG. 4 includes nine second grids. The second grid in the local grid 402 is a square.

In a possible implementation, any one of the at least one second grid includes a plurality of points and attribute information of the second grid.

The attribute information of the second grid may include semantic information of the second grid and height information of the second grid. Optionally, the attribute information of the second grid may further include reflection strength information of the second grid.

The semantic information of the second grid may indicate a probability that the second grid represents each of a plurality of types of objects. The probability that the second grid represents each of the plurality of types of objects may be understood as a probability that an object to which the point in the second grid belongs (or an object corresponding to the point in the second grid) is each of the plurality of types of objects. The height information of the second grid may indicate a height of the point included in the second grid. The reflection strength information of the second grid may indicate reflection strength of the point included in the second grid. It may be understood that content included in the attribute information of the second grid is similar to content included in the attribute information of the first grid. Therefore, for descriptions of the attribute information of the second grid, refer to descriptions of the attribute information of the first grid in S301. Details are not described herein.

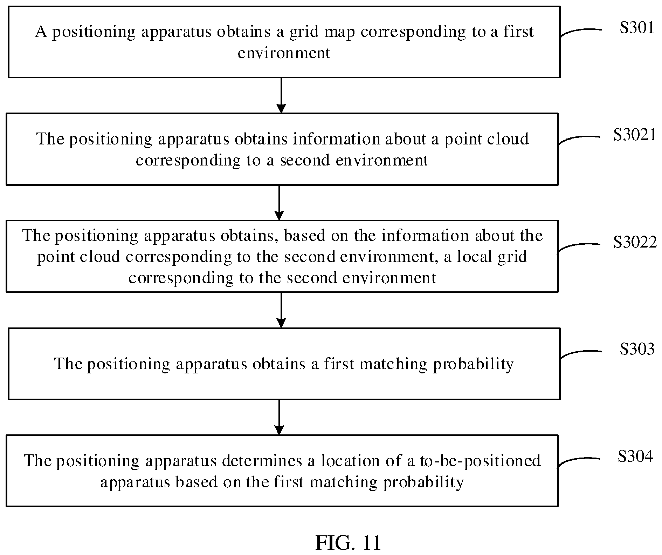

In a possible implementation, the positioning apparatus obtains information about a point cloud corresponding to the second environment, and obtains, based on the information about the point cloud corresponding to the second environment, the local grid corresponding to the second environment. The information about the point cloud corresponding to the second environment may indicate location information of a point in the point cloud corresponding to the second environment. Optionally, the information about the point cloud corresponding to the second environment may further indicate reflection strength of the point in the point cloud corresponding to the second environment. The foregoing specific process is described in a subsequent method shown in FIG. 11. Details are not described herein.

S303: The positioning apparatus obtains a first matching probability.

The first matching probability is a matching probability between the local grid and a grid on the grid map when the local grid is located at a different location on the grid map.

It may be understood that the first grid or the second grid corresponds to a plurality of types of attribute information. The positioning apparatus may determine, based on each type of attribute information, a first matching probability corresponding to each type of attribute information.

In a possible implementation, the positioning apparatus obtains, based on attribute information of the grid in the local grid and attribute information of the grid on the grid map, a first matching probability corresponding to each type of attribute information at a different location. Specifically, the positioning apparatus obtains a first deviation between first attribute information of the second grid in the local grid and first attribute information of the first grid corresponding to the second grid when the local grid is located in the first grid on the grid map, and obtains, based on the first deviation, a first matching probability corresponding to the first attribute information of the first grid on the grid map.

The first attribute information of the second grid is any piece of attribute information in the attribute information of the second grid. For example, the first attribute information of the second grid is the semantic information of the second grid, the height information of the second grid, or the reflection strength information of the second grid.

An attribute of the first attribute information of the first grid is the same as that of the first attribute information of the second grid. For example, if the first attribute information of the second grid is the semantic information of the second grid, the first attribute information of the first grid is the semantic information of the first grid. If the first attribute information of the second grid is the height information of the second grid, the first attribute information of the first grid is the height information of the first grid. If the first attribute information of the second grid is the reflection strength information of the second grid, the first attribute information of the first grid is the reflection strength information of the first grid.

Optionally, the positioning apparatus may further obtain a first prediction probability corresponding to each type of attribute information of the first grid on the grid map, so that the positioning apparatus determines, based on the first matching probability and the first prediction probability that correspond to each type of attribute information of the first grid on the grid map, a first posterior probability corresponding to each type of attribute information of the first grid, and further determines a location of the to-be-positioned apparatus based on the first posterior probability corresponding to each type of attribute information of the first grid.

A first prediction probability corresponding to first attribute information of any first grid on the grid map is a probability that is predicted based on the first attribute information and that the local grid is currently located in the first grid. A first posterior probability corresponding to the first attribute information of any first grid on the grid map is a product of the first prediction probability corresponding to the first attribute information of the first grid and the first matching probability corresponding to the first attribute information of the first grid.

When the first attribute information is the semantic information, the height information, and the reflection strength information, the following separately describes a process in which the positioning apparatus obtains the first matching probability and the first prediction probability that correspond to the first attribute information of the first grid when the local grid is located in the first grid on the grid map.

In a possible implementation, the positioning apparatus obtains a first matching probability and a first prediction probability that correspond to first attribute information of each first grid when the local grid is located in each first grid on the grid map. For details, refer to descriptions in Example 1 to Example 3 below.

Example 1: When the first attribute information is the semantic information, a process in which the positioning apparatus obtains the first matching probability and the first prediction probability that correspond to the first attribute information of each first grid when the local grid is located in each first grid on the grid map is as follows:

The grid map 401 and the local grid 402 shown in FIG. 4 are used as an example. The positioning apparatus may enable a center of the local grid 402 to be located one by one at centers of 63 first grids on the grid map 401, to obtain a first deviation between semantic information of each of nine second grids in the local grid 402 and semantic information of each of nine first grids corresponding to the nine second grids.

If the positioning apparatus enables the center of the local grid 402 to be located at a center of a black first grid on the grid map 401, the local grid 402 is equivalent to overlapping a grid in a shadow part of the grid map 401. A first grid corresponding to a second grid (1, 1) in the local grid 402 is a first grid (2, 7) on the grid map 401, a first grid corresponding to a second grid (1, 2) in the local grid 402 is a first grid (2, 8) on the grid map 401, a first grid corresponding to a second grid (1, 3) in the local grid 402 is a first grid (2, 9) on the grid map 401, a first grid corresponding to a second grid (2, 1) in the local grid 402 is a first grid (3, 7) on the grid map 401, a first grid corresponding to a second grid (2, 2) in the local grid 402 is a first grid (3, 8) on the grid map 401, and so on. A second grid (a, b) represents a grid in an $a^{th}$ row and a $b^{th}$ column in the local grid 402. Similarly, a first grid (a, b) represents a grid in an $a^{th}$ row and a $b^{th}$ column on the grid map 401.

For the second grid (1, 1) and the first grid (2, 7), a first deviation between semantic information of the second grid (1, 1) and semantic information of the first grid (2, 7) meets a formula $$s_1 = \sum_{b=1}^{n} (p_b - p_b^m)$$ . $s_1$ is the first deviation between the semantic information of the second grid (1, 1) and the semantic information of the first grid (2, 7), n is a quantity of the plurality of types of objects in S301, $p_b$ is a probability that the second grid represents a second object in the plurality of types of objects, and $p_b^m$ is a probability that the first grid represents the second object in the plurality of types of objects. The second object is any one of the plurality of types of objects. For example, if the plurality of types of objects include a tree, a building, and another object, a probability that the second grid represents the tree is 0.2, a probability that the second grid represents the building is 0.85, a probability that the second grid represents the another object is 0.05, a probability that the first grid represents the tree is 0.95, a probability that the first grid represents the building is 0.01, and a probability that the first grid represents the another object is 0.04, $s_1$ =(0.2-0.95)+(0.85-0.01)+(0.05-0.04). In a method the same as the foregoing method, the positioning apparatus may obtain a first deviation $s_2$ between semantic information of the second grid (1, 2) and semantic information of the first grid (2, 8), obtain a first deviation $s_3$ between semantic information of the second grid (1, 3) and semantic information of the first grid (2, 9), obtain a first deviation $s_4$ between semantic information of the second grid (2, 1) and semantic information of the first grid (3, 7), ..., and obtain a first deviation $s_9$ between semantic information of the second grid (3, 3) and semantic information of the first grid (4, 9). Subsequently, the positioning apparatus may obtain a first total deviation between the semantic information of the second grid and the semantic information of the first grid when the center of the local grid 402 is located at the center of the black first grid on the grid map 401, that is, the first total deviation

$$S = \sum_{a}^{9} s_a$$

. Subsequently, the positioning apparatus may obtain, based on the first total deviation, a first matching probability corresponding to semantic information of the black first grid when the center of the local grid 402 is located at the center of the black first grid on the grid map 401. The first matching probability $p(z|x_i,y_i,m)$ may meet a formula: $p(z|x_i,y_i,m) = \mu e^{-s}$. $x_i$ is a horizontal coordinate of a location of the center of the black first grid on the grid map 401, $y_i$ is a vertical coordinate of the location of the center of the black first grid on the grid map 401, and $\mu$ is a constant.

It may be understood that, the positioning apparatus may obtain, in a method the same as the foregoing method, the first total deviation between the semantic information of the second grid and the semantic information of the first grid when the center of the local grid 402 is located at a center of each of the other 62 first grids on the grid map 401, and obtain, based on each first total deviation, a first matching probability corresponding to the semantic information of each first grid when the center of the local grid 402 is located at the center of each of the other 62 first grids on the grid map 401.

In a possible implementation, if the positioning apparatus determines the location of the to-be-positioned apparatus for the first time, a first prediction probability corresponding to semantic information of any first grid on the grid map is a preset initial value, for example, a ratio of 1 to a quantity of first grids on the grid map. That is, the first prediction probability corresponding to the semantic information of any first grid meets a formula $\bar{p}(x_i, y_i) = 1/\text{num}$. $\bar{p}(x_i, y_i)$ is the first prediction probability corresponding to the semantic information of any one first grid, $x_i$ is a horizontal coordinate of a center of the first grid, $y_i$ is a vertical coordinate of the center of the first grid, and num is a quantity of first grids on the grid map.

In another possible implementation, if the positioning apparatus does not determine the location of the to-be-positioned apparatus for the first time, a first prediction probability corresponding to semantic information of any first grid

$$\bar{p}(x_i, y_i) = \eta p(x_0, y_0 \mid z, m)\exp(-\frac{(x_i - x_0)^2 + (y_i - y_0)^2}{2\sigma^2})$$

on the grid map meets a formula:

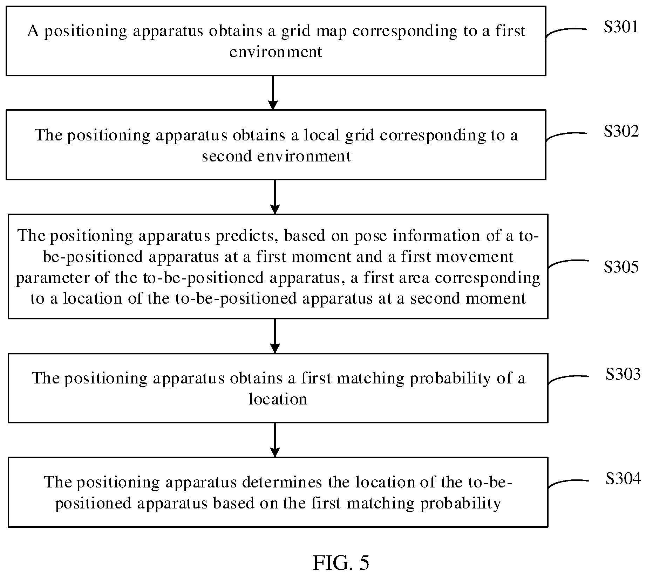

$\eta$ is a constant, $p(x_0, y_0|z, m)$ is a first posterior probability that is obtained last time and that corresponds to semantic information when the location of the to-be-positioned apparatus on the grid map is $(x_0, y_0)$, and $(x_0, y_0)$ is a location that is of the to-be-positioned apparatus on the grid map at a current moment and that is predicted by the positioning apparatus based on location information of the to-be-positioned apparatus at a previous moment and the movement parameter of the to-be-positioned apparatus. For a process in which the positioning apparatus predicts, based on the location information of the to-be-positioned apparatus at the previous moment and the movement parameter of the to-be-positioned apparatus, the location of the to-be-positioned apparatus at the current moment on the grid map, refer to descriptions in the subsequent method shown in FIG. 5. Details are not described herein. $\sigma$ is a variance.

In this embodiment of this application, the center of the local grid may alternatively be replaced with another location, for example, an upper left corner of the local grid (for example, an upper left corner of the second grid (1, 1) in the local grid 402), an upper right corner of the local grid (for example, an upper right corner of the second grid (1, 3) in the local grid 402), a lower left corner of the local grid (for example, a lower left corner of the second grid (3, 1) in the local grid 402), and a lower right corner of the local grid (for example, an upper right corner of the second grid (3, 3) in local grid 402). Similarly, the center of the first grid may alternatively be replaced with another location. For example, if the center of the local grid is replaced with an upper left corner of the local grid, the center of the first grid may be replaced with an upper left corner of the first grid (for example, an upper left corner of the first grid (2, 7) on the grid map 401). If the center of the local grid is replaced with an upper right corner of the local grid, the center of the first grid may be replaced with an upper right corner of the first grid (for example, an upper right corner of the first grid (2, 7) on the grid map 401). If the center of the local grid is replaced with a lower left corner of the local grid, the center of the first grid may be replaced with a lower left corner of the first grid (for example, a lower left corner of the first grid (2, 7) on the grid map 401). If the center of the local grid is replaced with a lower right corner of the local grid, the center of the first grid may be replaced with a lower right corner of the first grid (for example, a lower right corner of the first grid (2, 7) on the grid map 401).

Example 2: When the first attribute information is the height information, a process in which the positioning apparatus obtains the first matching probability and the first prediction probability that correspond to the first attribute information of each first grid when the local grid is located in each first grid on the grid map is as follows:

The grid map 401 and the local grid 402 shown in FIG. 4 are used as an example. Similar to that the positioning apparatus obtains the first deviation between semantic information of each of nine second grids in the local grid 402 and semantic information of each of nine first grids corresponding to the nine second grids, when enabling a center of the local grid 402 to be located one by one at centers of 63 first grids on the grid map 401, the positioning apparatus may obtain a first deviation between height information of each of nine second grids in the local grid 402 and height information of each of nine first grids corresponding to the nine second grids.

If the positioning apparatus enables the center of the local grid 402 to be located at a center of a black first grid on the grid map 401, the local grid 402 is equivalent to overlapping a grid in a shadow part of the grid map 401. For the second grid (1, 1) and the first grid (2, 7), a first deviation between height information of the second grid (1, 1) and height information of the first grid (2, 7) meets a formula $\overline{h_1} = h_1 - h_1^m$. $\overline{h_1}$ is the first deviation between the height information of the second grid (1, 1) and the height information of the first grid (2, 7), $h_1$ is an average value of heights of all points included in the second grid (1, 1), and $h_1^m$ is an average value of heights of all points included in the first grid (2, 7). In a method the same as the foregoing method, the positioning apparatus may obtain a first deviation $\overline{h_2}$ between height information of the second grid (1, 2) and height information of the first grid (2, 8), obtain a first deviation $\overline{h_3}$ between height information of the second grid (1, 3) and height information of the first grid (2, 9), obtain a first deviation $\overline{h_4}$ between height information of the second grid (2, 1) and height information of the first grid (3, 7), ..., and obtain a first deviation $\overline{h_9}$ between height information of the second grid (3, 3) and height information of the first grid (4, 9). Subsequently, the positioning apparatus may obtain a first total deviation between the height information of the second grid and the height information of the first grid when the center of the local grid 402 is located at the center of the black first grid on the grid

$$H = \sum_i^9 \overline{h_i}$$

map 401, that is, the first total deviation . Subsequently, the positioning apparatus may obtain, based on the first total deviation, a first matching probability corresponding to height information of the black first grid when the center of the local grid 402 is located at the center of the black first grid on the grid map 401. The first matching probability $q(z|x_i, y_i, m)$ may meet a formula: $q(z|x_i, y_i, m) = \mu e^{-H}$.

It may be understood that, the positioning apparatus may obtain, in a method the same as the foregoing method, the first total deviation between the height information of the second grid and the height information of the first grid when the center of the local grid 402 is located at a center of each of the other 62 first grids on the grid map 401, and obtain, based on each first total deviation, a first matching probability corresponding to the height information of each first grid when the center of the local grid 402 is located at the center of each of the other 62 first grids on the grid map 401.

In a possible implementation, if the positioning apparatus determines the location of the to-be-positioned apparatus for the first time, a first prediction probability corresponding to height information of any first grid on the grid map is a preset initial value, for example, a ratio of 1 to a quantity of first grids on the grid map. That is, the first prediction probability corresponding to the height information of any first grid meets a formula $\overline{q}(x_i, y_i) = 1 / num$. $\overline{q}(x_i, y_i)$ is the first prediction probability corresponding to the height information of any one first grid, $x_i$ is a horizontal coordinate of a center of the first grid, and $y_i$ is a vertical coordinate of the center of the first grid.

In another possible implementation, if the positioning apparatus does not determine the location of the to-be-positioned apparatus for the first time, a first prediction probability corresponding to height information of any first grid on the grid map meets a formula:

$$\overline{q}(x_i, y_i) = \eta q(x_0, y_0 \mid z, m) \exp(-\frac{(x_i - x_0)^2 + (y_i - y_0)^2}{2\sigma^2})$$

$\eta$ is a constant, $q(x_0, y_0|z, m)$ is a first posterior probability that is obtained last time and that corresponds to height information when the location of the to-be-positioned apparatus on the grid map is $(x_0, y_0)$, $(x_0, y_0)$ is a location that is of the to-be-positioned apparatus on the grid map at a current moment and that is predicted by the positioning apparatus based on location information of the to-be-positioned apparatus at a previous moment and the movement parameter of the to-be-positioned apparatus, and $\sigma$ is a variance.

Example 3: When the first attribute information is the reflection strength information, a process in which the positioning apparatus obtains the first matching probability and the first prediction probability that correspond to the first attribute information of each first grid when the local grid is located in each first grid on the grid map is as follows:

It may be understood that, a process in which the positioning apparatus obtains the first matching probability corresponding to the first attribute information of each first grid when the first attribute information is the reflection strength information is similar to a process in which the positioning apparatus obtains the first matching probability corresponding to the first attribute information of each first grid when the first attribute information is the height information.

The grid map 401 and the local grid 402 shown in FIG. 4 are used as an example. When enabling a center of the local grid 402 to be located one by one at centers of 63 first grids on the grid map 401, the positioning apparatus may obtain a first deviation between reflection strength information of each of nine second grids in the local grid 402 and reflection strength information of each of nine first grids corresponding to the nine second grids.

If the positioning apparatus enables the center of the local grid 402 to be located at a center of a black first grid on the grid map 401, the local grid 402 is equivalent to overlapping a grid in a shadow part of the grid map 401. For the second grid (1, 1) and the first grid (2, 7), a first deviation between reflection strength information of the second grid (1, 1) and reflection strength information of the first grid (2, 7) may meet a formula $\overline{a_1} = a_1 - a_1^m$. $\overline{a_1}$ is the first deviation between the reflection strength information of the second grid (1, 1) and the reflection strength information of the first grid (2, 7), $a_1$ is an average value of reflection strength of all points included in the second grid (1, 1), and $a_1^m$ is an average value of reflection strength of all points included in the first grid (2, 7). In a method the same as the foregoing method, the positioning apparatus may obtain a first deviation $\overline{a_2}$ between reflection strength information of the second grid (1, 2) and reflection strength information of the first grid (2, 8), obtain a first deviation $\overline{a_3}$ between reflection strength information of the second grid (1, 3) and reflection strength information of the first grid (2, 9), obtain a first deviation $\overline{a_4}$ between reflection strength information of the second grid (2, 1) and reflection strength information of the first grid (3, 7), ..., and obtain a first deviation $\overline{a_9}$ between reflection strength information of the second grid (3, 3) and reflection strength information of the first grid (4, 9). Subsequently, the positioning apparatus may obtain a first total deviation between the reflection strength information of the second grid and the reflection strength information of the first grid when the center of the local grid 402 is located at the center of the black first grid on the grid map 401, that is, the first total deviation $A = \sum_{i}^{9} \overline{a_i}$. Subsequently, the positioning apparatus may obtain, based on the first total deviation, a first matching probability corresponding to reflection strength information of the black first grid when the center of the local grid 402 is located at the center of the black first grid on the grid map 401. The first matching probability $r(z|x_i, y_i, m)$ may meet a formula: $r(z|x_i, y_i, m) = \mu e^{-A}$.

It may be understood that, the positioning apparatus may obtain, in a method the same as the foregoing method, the first total deviation between the reflection strength information of the second grid and the reflection strength information of the first grid when the center of the local grid 402 is located at a center of each of the other 62 first grids on the grid map 401, and obtain, based on each first total deviation, a first matching probability corresponding to the reflection strength information of each first grid when the center of the local grid 402 is located at the center of each of the other 62 first grids on the grid map 401.

In a possible implementation, if the positioning apparatus determines the location of the to-be-positioned apparatus for the first time, a first prediction probability corresponding to reflection strength information of any first grid on the grid map is a preset initial value, for example, a ratio of 1 to a quantity of first grids on the grid map. That is, the first prediction probability corresponding to the reflection strength information of any first grid meets a formula $\overline{r}(x_i, y_i) = 1 / num$. $\overline{r}(x_i, y_i)$ is the first prediction probability corresponding to the reflection strength information of any one first grid, $x_i$ is a horizontal coordinate of a center of the first grid, and $y_i$ is a vertical coordinate of the center of the first grid.

In another possible implementation, if the positioning apparatus does not determine the location of the to-be-positioned apparatus for the first time, a first prediction probability corresponding to reflection strength information of any first grid on the grid map meets a formula:

$$\overline{r}(x_i, y_i) = \eta r(x_0, y_0 \mid z, m) \exp(-\frac{(x_i - x_0)^2 + (y_i - y_0)^2}{2\sigma^2})$$
.

$\eta$ is a constant, $r(x_0, y_0|z, m)$ is a first posterior probability that is obtained last time and that corresponds to reflection strength information when the location of the to-be-positioned apparatus on the grid map is $(x_0, y_0)$, $(x_0, y_0)$ is a location that is of the to-be-positioned apparatus on the grid map at a current moment and that is predicted by the positioning apparatus based on location information of the to-be-positioned apparatus at a previous moment and the movement parameter of the to-be-positioned apparatus, and $\sigma$ is a variance.

S304: The positioning apparatus determines the location of the to-be-positioned apparatus based on the first matching probability.

The location of the to-be-positioned apparatus is a location of the to-be-positioned apparatus on the grid map.

For example, the to-be-positioned apparatus is an intelligent vehicle. The location of the to-be-positioned apparatus is a location of a centroid of the intelligent vehicle on the grid map.

In a possible implementation, the positioning apparatus determines, based on the first matching probability corresponding to each type of attribute information at a different location, location information corresponding to each type of attribute information, and determines the location of the to-be-positioned apparatus based on the location information corresponding to each type of attribute information.

First, a process in which the positioning apparatus determines, based on the first matching probability corresponding to each type of attribute information at a different location, the location information corresponding to each type of attribute information is described.

In a possible implementation, the positioning apparatus determines, based on the first matching probability corresponding to each type of attribute information at a different location and a first prediction probability corresponding to each type of attribute information at a different location, a first posterior probability corresponding to each type of attribute information at a different location, and determines, based on the first posterior probability corresponding to each type of attribute information at a different location, the location information corresponding to each type of attribute information.

For the semantic information, a first posterior probability corresponding to semantic information of any first grid on the grid map is a product of a first prediction probability corresponding to the semantic information of the first grid and a first matching probability corresponding to the semantic information of the first grid.

Example 1 above is used as an example. If the center of the local grid 402 is located at the center of the black first grid on the grid map 401, the first posterior probability corresponding to the semantic information of the black first grid on the grid map 401 meets a formula: $p(x_i, y_i|z, m) = \overline{p}(x_i, y_i)p(z|x_i, y_i, m)$. The location information corresponding

$$\overline{x}_p = \frac{\sum_{i=1}^{N} p(x_i, y_i \mid z, m) x_i}{\sum_{i=1}^{N} p(x_i, y_i \mid z, m)} \qquad \overline{y}_p = \frac{\sum_{i=1}^{N} p(x_i, y_i \mid z, m) y_i}{\sum_{i=1}^{N} p(x_i, y_i \mid z, m)}$$

to the semantic information meets formulas:                      , and                      . $\overline{x}_p$ is a horizontal coordinate that is of the to-be-positioned apparatus on the grid map and that is determined based on the semantic information, namely, a horizontal coordinate that is of the to-be-positioned apparatus on the grid map and that corresponds to the semantic information, $x_i$ is a horizontal coordinate of a center of an $i^{th}$ first grid on the grid map, $p(x_i, y_i|z, m)$ is a first posterior probability corresponding to semantic information of the $i^{th}$ first grid on the grid map, N is a quantity of first grids included in the grid map, $\overline{y}_p$ is a vertical coordinate that is of the to-be-positioned apparatus on the grid map and that is determined based on the semantic information, namely, a vertical coordinate that is of the to-be-positioned apparatus on the grid map and that corresponds to the semantic information, and $y_i$ is a vertical coordinate of the center of the $i^{th}$ first grid on the grid map.

For the height information, a first posterior probability corresponding to height information of any first grid on the grid map is a product of a first prediction probability corresponding to the height information of the first grid and a first matching probability corresponding to the height information of the first grid.

Example 2 above is used as an example. If the center of the local grid 402 is located at the center of the black first grid on the grid map 401, the first posterior probability corresponding to the height information of the black first grid on the grid map 401 meets a formula: $q(x_i, y_i|z, m) = \overline{q}(x_i, y_i)q(z|x_i, y_i, m)$. The location information corresponding to the

$$\overline{x}_h = \frac{\sum_{i=1}^{N} q(x_i, y_i \mid z, m) x_i}{\sum_{i=1}^{N} q(x_i, y_i \mid z, m)} \qquad \overline{y}_h = \frac{\sum_{i=1}^{N} q(x_i, y_i \mid z, m) y_i}{\sum_{i=1}^{N} q(x_i, y_i \mid z, m)}$$

height information meets formulas:                      , and                      . $\overline{x}_h$ is a horizontal coordinate that is of the to-be-positioned apparatus on the grid map and that is determined based on the height information, namely, a horizontal coordinate that is of the to-be-positioned apparatus on the grid map and that corresponds to the height information, $q(x_i, y_i|z, m)$ is a first posterior probability corresponding to height information of an $i^{th}$ first grid on the grid map, and $\overline{y}_h$ is a vertical coordinate that is of the to-be-positioned apparatus on the grid map and that is determined based on the height information, namely, a vertical coordinate that is of the to-be-positioned apparatus on the grid map and that corresponds to the height information.

For the reflection strength information, a first posterior probability corresponding to reflection strength information of any first grid on the grid map is a product of a first prediction probability corresponding to the reflection strength information of the first grid and a first matching probability corresponding to the reflection strength information of the first grid.

Example 3 above is used as an example. If the center of the local grid 402 is located at the center of the black first grid on the grid map 401, the first posterior probability corresponding to the reflection strength information of the black first grid on the grid map 401 meets a formula: $r(x_i, y_i | z, m) = \overline{r}(x_i, y_i) r(z | x_i, y_i, m)$. The location information corresponding

$$\overline{x}_a = \frac{\sum_{i=1}^{N} r(x_i, y_i \mid z, m) x_i}{\sum_{i=1}^{N} r(x_i, y_i \mid z, m)} \qquad \overline{y}_a = \frac{\sum_{i=1}^{N} r(x_i, y_i \mid z, m) y_i}{\sum_{i=1}^{N} r(x_i, y_i \mid z, m)}$$

to the reflection strength information meets formulas: , and . $\overline{x}_a$ is a horizontal coordinate that is of the to-be-positioned apparatus on the grid map and that is determined based on the reflection strength information, namely, a horizontal coordinate that is of the to-be-positioned apparatus on the grid map and that corresponds to the reflection strength information, $r(x_i, y_i | z, m)$ is a first posterior probability corresponding to reflection strength information of an $i^{th}$ first grid on the grid map, and $\overline{y}_a$ is a vertical coordinate that is of the to-be-positioned apparatus on the grid map and that is determined based on the reflection strength information, namely, a vertical coordinate that is of the to-be-positioned apparatus on the grid map and that corresponds to the reflection strength information.

The following describes the process in which the positioning apparatus determines the location of the to-be-positioned apparatus based on the location information corresponding to each type of attribute information.

In a possible implementation, the positioning apparatus performs weighted summation on the location information corresponding to each type of attribute information, to obtain the location of the to-be-positioned apparatus.

It may be understood that in a process of performing weighted summation on the location information corresponding to each type of attribute information, to obtain the location of the to-be-positioned apparatus, a weight corresponding to each type of attribute information may be first determined. It may be understood that weights corresponding to all types of attribute information may be the same or may be different. For example, all weights corresponding to all types of attribute information are 1. The weight corresponding to each type of attribute information may be preset and stored in the positioning apparatus, or may be determined based on an algorithm.

In a possible implementation, the weight corresponding to each type of attribute information is determined based on a distribution status of a first matching probability corresponding to the attribute information. For example, a more centralized distribution of the first matching probability corresponding to the attribute information on the grid map indicates a higher weight corresponding to the attribute information, and a less centralized distribution of the first matching probability corresponding to the attribute information on the grid map indicates a lower weight corresponding to the attribute information.

In an example, the weight corresponding to each type of attribute information is determined based on a variance of the first matching probability corresponding to the attribute information. For example, a weight corresponding to the semantic information may meet a formula: $w_p = \xi e^{-up}$. $w_p$ is the weight corresponding to the semantic information, $\xi$ is a constant, and $u_p$ is a variance of a first matching probability corresponding to the semantic information. A weight corresponding to the height information may meet a formula: $w_h = \xi e^{-uh}$. $w_h$ is the weight corresponding to the height information, and $u_h$ is a variance of a first matching probability corresponding to the height information. A weight corresponding to the reflection strength information may meet a formula: $w_a = \xi e^{-ua}$. $w_a$ is the weight corresponding to the reflection strength information, and $u_a$ is a variance of a first matching probability corresponding to the reflection strength information. It may be understood that a smaller variance indicates a more centralized distribution of the first matching probability corresponding to the variance, and a larger variance indicates a less centralized distribution of the first matching probability corresponding to the variance.

In a possible implementation, the location of the to-be-positioned apparatus meets the following formulas:

$$X = \frac{w_p \overline{x}_p + w_h \overline{x}_h + w_a \overline{x}_a}{w_p + w_h + w_a} \qquad \text{and} \qquad Y = \frac{w_p \overline{y}_p + w_h \overline{y}_h + w_a \overline{y}_a}{w_p + w_h + w_a}$$

. X is a horizontal coordinate that is of the to-be-positioned apparatus on the grid map and that is determined by the positioning apparatus, and Y is a vertical coordinate that is of the to-be-positioned apparatus on the grid map and that is determined by the positioning apparatus.

It may be understood that, to make the location, of the to-be-positioned apparatus, that is determined by the positioning apparatus more accurate, after determining the location information corresponding to each type of attribute information, the positioning apparatus may first screen the location information, remove inaccurate location information, and then determine the location of the to-be-positioned apparatus based on screened position information.

In a possible implementation, the positioning apparatus determines, in the location information corresponding to each type of attribute information, location information corresponding to at least one type of attribute information that conforms to a preset rule, and determines the location of the to-be-positioned apparatus based on the location information corresponding to the at least one type of attribute information.

The preset rule may include at least one of the following rules: determining, in the location information corresponding to each type of attribute information, location information whose distance to a first location is less than or equal to a first value as the location information corresponding to the at least one type of attribute information; or determining, in the location information corresponding to each type of attribute information, location information whose matching degree is greater than or equal to a second value as the location information corresponding to the at least one type of attribute information.

The first location is a location that is of the to-be-positioned apparatus on the grid map at a current moment and that is predicted by the positioning apparatus based on location information of the to-be-positioned apparatus at a previous moment and the movement parameter of the to-be-positioned apparatus. A matching degree of location information corresponding to any type of attribute information may be obtained through matching, based on an ICP algorithm, a point that corresponds to the location information and that is on a point cloud map corresponding to the first environment with a point in a point cloud corresponding to the first environment. For descriptions of the point cloud map corresponding to the first environment and the point cloud corresponding to the first environment, refer to corresponding descriptions in the subsequent method shown in FIG. 10. Details are not described herein.

In a possible implementation, if a quantity of the at least one type of attribute information is greater than 1, weighted summation is performed on the location information corresponding to the at least one type of attribute information, to obtain the location of the to-be-positioned apparatus. If a quantity of the at least one type of attribute information is equal to 1, the location information corresponding to the at least one type of attribute information is determined as the location of the to-be-positioned apparatus. A manner for determining the weight corresponding to the attribute information is described above. Details are not described herein.

It should be noted that the positioning apparatus may not determine the first posterior probability corresponding to each type of attribute information at a different location, but directly determine, based on the first matching probability corresponding to each type of attribute information at a different location, the location information corresponding to each type of attribute information, and then determine the location of the to-be-positioned apparatus based on the location information corresponding to each type of attribute information. It should be understood that the first posterior probability corresponding to the attribute information is obtained after considering the first prediction probability corresponding to the attribute information. Therefore, the location, of the to-be-positioned apparatus, that is determined based on the first posterior probability corresponding to each type of attribute information at a different location is more accurate than the location, of the to-be-positioned apparatus, that is directly determined based on the first matching probability corresponding to each type of attribute information at a different location. According to the method shown in FIG. 3, the positioning apparatus may obtain the grid map corresponding to the first environment, obtain the local grid corresponding to the second environment information, and perform positioning on the to-be-positioned apparatus based on a plurality of types of attribute information of the first grid on the grid map and a plurality of types of attribute information of the second grid in the local grid, so that the positioning apparatus does not rely on only one attribute for positioning, and positioning accuracy and stability are improved.

It may be understood that, in the method shown in FIG. 3, each time when performing positioning, the positioning apparatus obtains first matching probabilities between the local grid and grids on the grid map one by one, and consequently calculation overheads are high. During specific application, when determining the location of the to-be-positioned apparatus for the first time, the positioning apparatus may obtain the matching probabilities between the local grid and the grids on the grid map one by one. However, when the positioning apparatus does not determine the location of the to-be-positioned apparatus for the first time, the positioning apparatus may match the local grid with the grid on the grid map in a histogram filter method. For example, the positioning apparatus may first predict the location of the to-be-positioned apparatus on the grid map, and then obtain the matching probability between the local grid and the grid, on the grid map, corresponding to the location. In this way, the matching probabilities between the local grid and the grids on the grid map may not need to be obtained one by one, so that calculation overheads are reduced.

Optionally, as shown in FIG. 5, in a possible implementation of the method shown in FIG. 3, the method shown in FIG. 3 may further include S305.

S305: The positioning apparatus predicts, based on pose information of the to-be-positioned apparatus at a first moment and the movement parameter of the to-be-positioned apparatus, a first area corresponding to a location of the to-be-positioned apparatus at a second moment.

The first moment is a moment at which the positioning apparatus performs positioning on the to-be-positioned apparatus last time. The pose information at the first moment indicates a location and an orientation angle of the to-be-positioned apparatus that are determined by the positioning apparatus on the grid map last time. The orientation angle of the to-be-positioned apparatus on the grid map may indicate a movement direction of the to-be-positioned apparatus on the grid map. The second moment is the current moment. The location at the second moment is the location of the to-be-positioned apparatus on the grid map at the current moment. In other words, the positioning apparatus may predict the location of the to-be-positioned apparatus at the current moment based on the pose information, of the to-be-positioned apparatus, that is determined last time and the movement parameter of the to-be-positioned apparatus.

The movement parameter may be a parameter obtained by a sensing module in real time. The sensing module may be the sensing apparatus 102 in FIG. 1A or the sensing module 1112 in FIG. 1B. In this case, the movement parameter is inertial measurement unit (inertial measurement unit, IMU) data. Alternatively, the sensing module may be a wheel speed sensor installed on the to-be-positioned apparatus. In this case, the movement parameter is data from a wheel odometer. After obtaining the movement parameter, the positioning apparatus may obtain parameters such as an angular velocity of the to-be-positioned apparatus and a linear velocity of the to-be-positioned apparatus based on the movement parameter. Optionally, the positioning apparatus may further obtain a rotation angle of a wheel of the to-be-positioned apparatus based on the movement parameter.

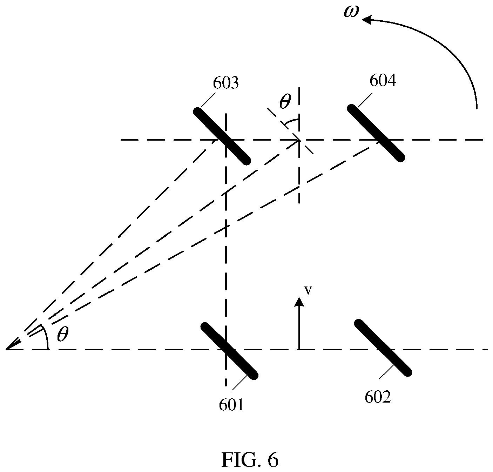

In an example, the angular velocity of the to-be-positioned apparatus, the linear velocity of the to-be-positioned apparatus, and the rotation angle of the wheel of the to-be-positioned apparatus may be shown in FIG. 6. In FIG. 6, a line 601 and a line 602 represent two rear wheels of an intelligent vehicle, and a line 603 and a line 604 represent two front wheels of the intelligent vehicle. The angular velocity $\omega$ of the to-be-positioned apparatus may be a radian that the to-be-positioned apparatus passes by per unit time. The linear velocity v of the to-be-positioned apparatus may be a distance passed by a center point of a connection line between two rear wheels of the intelligent vehicle per unit time. The rotation angle $\theta$ of the wheel of the to-be-positioned apparatus may be an included angle between the wheel of the intelligent vehicle and a connection line between a center of the two front wheels and a center of the two rear wheels of the intelligent vehicle.

In a possible implementation, a pose ($x_{t1}$, $y_{t1}$, $\theta_{t1}$) of the to-be-positioned apparatus at the first moment and the predicted position ($x_{t2}$, $y_{t2}$) of the to-be-positioned apparatus at the second moment meet a formula:

$$\begin{bmatrix} x_{t2} \\ y_{t2} \end{bmatrix} = \begin{bmatrix} x_{t1} + v\cos(\theta_{t1} + \frac{1}{2}\omega\Delta t) \\ y_{t1} + v\sin(\theta_{t1} + \frac{1}{2}\omega\Delta t) \end{bmatrix}$$

. $x_{t1}$ is a horizontal coordinate of the to-be-positioned apparatus on the grid map at the first moment, $y_{t1}$ is a vertical coordinate of the to-be-positioned apparatus on the grid map at the first moment, $x_{t2}$ is a predicted horizontal coordinate of the to-be-positioned apparatus on the grid map at the second moment, $y_{t2}$ is a predicted vertical coordinate of the to-be-located apparatus on the grid map at the second moment, v is the linear velocity of the to-be-located apparatus, $\omega$ is the angular velocity of the to-be-located apparatus, and $\Delta t$ is a difference between the second moment and the first moment.

It may be understood that an error may occur when the positioning apparatus predicts the location of the to-be-positioned apparatus at the second moment. Therefore, after the positioning apparatus predicts the location of the to-be-positioned apparatus at the second moment, the first area may be determined based on the predicted location of the to-be-positioned apparatus at the second moment. Subsequently, the positioning apparatus may obtain a first matching probability between the local grid and a grid in the first area, and determine the location of the to-be-positioned apparatus based on the first matching probability. In this way, positioning accuracy and stability of the positioning apparatus can be improved, and computing overheads can be further reduced.

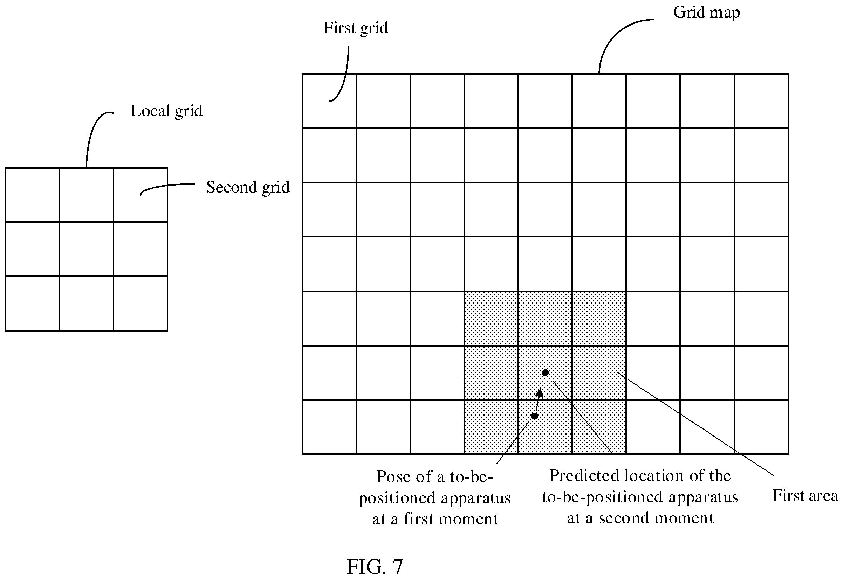

In an example, the positioning apparatus may determine, as the first area, an area within a specific range with the predicted location of the to-be-positioned apparatus at the second moment as a center. For example, if the pose of the to-be-positioned apparatus at the first moment and the predicted location of the to-be-positioned apparatus at the second moment are shown in FIG. 7, the first area may be a shadow part in FIG. 7.

It may be understood that, after the positioning apparatus determines the first area, the positioning apparatus may not need to obtain the first matching probability in the method shown in FIG. 3, and determine the location of the to-be-positioned apparatus based on the first matching probability. The positioning apparatus may obtain a first matching probability between the local grid and a grid on a previous map when the local grid is located in the grid in the first area, namely, a first matching probability of the grid in the first area, and determine the location of the to-be-positioned apparatus based on the first matching probability of the grid in the first area. The following provides detailed descriptions.

In a possible implementation, the positioning apparatus obtains, based on attribute information of the grid in the local grid and attribute information of the grid in the first area, the first matching probability corresponding to each type of attribute information at a different location. Specifically, the positioning apparatus obtains the first deviation between the first attribute information of the second grid in the local grid and the first attribute information of the first grid corresponding to the second grid when the local grid is located in the first grid in the first area, and obtains, based on the first deviation, the first matching probability corresponding to the first attribute information of the first grid in the first area. The first attribute information of the second grid is any piece of attribute information in the attribute information of the second grid, and an attribute of the first attribute information of the first grid is the same as that of the first attribute information of the second grid. The foregoing specific process is similar to the process in which the positioning apparatus obtains the first matching probability corresponding to the first attribute information of the first grid on the grid map in S303. Therefore, for details, refer to descriptions in S303. Details are not described herein.

In a possible implementation, the positioning apparatus may further obtain the first prediction probability corresponding to each type of attribute information of the first grid in the first area, so that the positioning apparatus determines, based on the first matching probability and the first prediction probability that correspond to each type of attribute information of the first grid in the first area, the first posterior probability corresponding to each type of attribute information of the first grid in the first area, and further determines the location of the to-be-positioned apparatus based on the first posterior probability corresponding to each type of attribute information of the first grid in the first area. A process in which the positioning apparatus obtains the first prediction probability corresponding to each type of attribute information of the first grid in the first area is similar to the process in which the positioning apparatus obtains the first prediction probability corresponding to each type of attribute information of the first grid on the grid map in S303. Therefore, for details, refer to corresponding descriptions in S303. Details are not described herein.

In a possible implementation, the positioning apparatus determines, based on the first matching probability corresponding to each type of attribute information of the first grid in the first area, the location information corresponding to each type of attribute information, and determines the location of the to-be-positioned apparatus based on the location information corresponding to each type of attribute information. Specifically, the positioning apparatus determines, based on the first matching probability and the first prediction probability that correspond to each type of attribute information of the first grid in the first area, the first posterior probability corresponding to each type of attribute information of the first grid in the first area, determines, based on the first posterior probability corresponding to each type of attribute information of the first grid in the first area, the location information corresponding to each type of attribute information, and determines the location of the to-be-positioned apparatus based on the location information corresponding to each type of attribute information. The foregoing process is similar to the process in which the positioning apparatus determines the location of the to-be-positioned apparatus in S304. Therefore, for details, refer to corresponding descriptions in S304. Details are not described herein.

It may be understood that, to make the location, of the to-be-positioned apparatus, that is determined by the positioning apparatus more accurate, after determining the location information corresponding to each type of attribute information, the positioning apparatus may first screen the location information, remove inaccurate location information, and then determine the location of the to-be-positioned apparatus based on screened position information. For details, refer to corresponding descriptions in S304. Details are not described herein.

According to the method shown in FIG. 3 or FIG. 5, the positioning apparatus may perform positioning on the to-be-positioned apparatus, and obtain the location of the to-be-positioned apparatus. During specific application, the positioning apparatus may further obtain the orientation angle of the to-be-positioned apparatus.

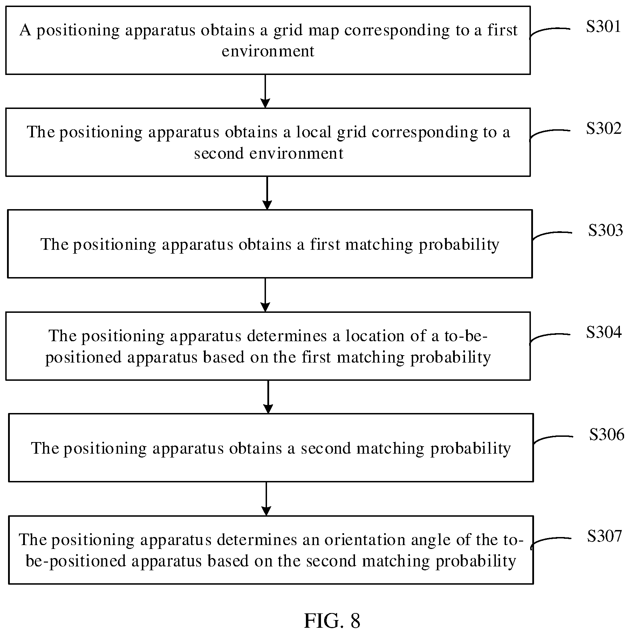

Optionally, as shown in FIG. 8, in a possible implementation of the method shown in FIG. 3, the method shown in FIG. 3 further includes S306 and S307.

S306: The positioning apparatus obtains a second matching probability.

The second matching probability is a matching probability between the local grid and the grid on the grid map when the local grid is located at the location of the to-be-positioned apparatus and the local grid is rotated by a different angle. Different rotation angles of the local grid correspond to different orientation angles of the to-be-positioned apparatus.

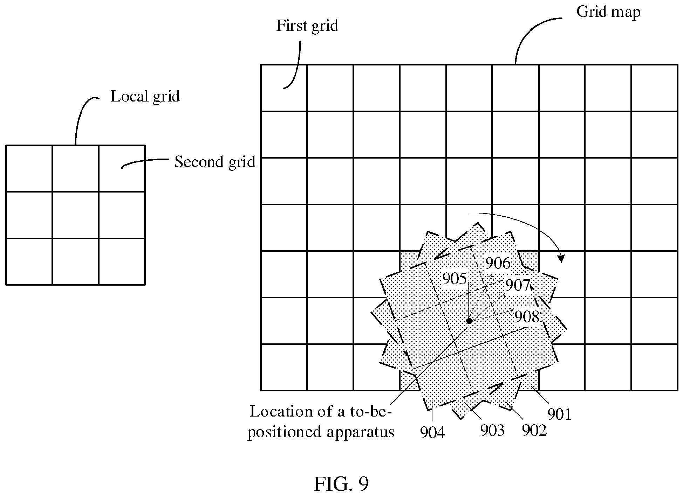

For example, as shown in FIG. 9, a center of the local grid may be located at the location of the to-be-positioned apparatus, for example, a local grid 901 in FIG. 9, and the local grid is rotated with the location of the to-be-positioned apparatus as a center, so that local grids with different rotation angles, for example, a local grid 902 to a local grid 904 in FIG. 9, may be obtained. An orientation angle that is of the to-be-positioned apparatus and that corresponds to a rotation angle of the local grid 901 is an orientation angle corresponding to an arrow 905, an orientation angle that is of the to-be-positioned apparatus and that corresponds to an rotation angle of the local grid 902 is an orientation angle corresponding to an arrow 906, an orientation angle that is of the to-be-positioned apparatus and that corresponds to an rotation angle of the local grid 903 is an orientation angle corresponding to an arrow 907, and an orientation angle that is of the to-be-positioned apparatus and that corresponds to a rotation angle of the local grid 904 is an orientation angle corresponding to an arrow 908. Subsequently, the positioning apparatus may obtain second matching probabilities between local grids with different rotation angles and grids on the grid map, for example, a second matching probability between the local grid 901 and a grid on the grid map, a second matching probability of the local grid 902 and a grid on the grid map, a second matching probability of the local grid 903 and a grid on the grid map, and a second matching probability of the local grid 904 and a grid on the grid map.

The rotation angle of the local grid is an included angle between a rotated local grid and a local grid that is initially located at the location of the to-be-positioned apparatus. FIG. 9 is used as an example. A rotation angle of the local grid 902 is an included angle between the local grid 902 and the local grid 901, and a rotation angle of the local grid 903 is an included angle between the local grid 903 and the local grid 901. In this embodiment of this application, differences between rotation angles of two adjacent rotations of the local grid may be the same or may be different. This is not limited.

In a possible implementation, the positioning apparatus obtains second matching probabilities of a plurality of rotation angles corresponding to the local grid when the local grid is located at the location of the to-be-positioned apparatus.

In a possible design, the center of the local grid is located at the location of the to-be-positioned apparatus, and the local grid is rotated by one circle with the location of the to-be-positioned apparatus as a center, to obtain a plurality of rotation angles. For example, the plurality of rotation angles may be 0°, 45°, 90°, 135°, 180°, 225°, 270°, and 315°.

In another possible design, if the positioning apparatus does not determine the orientation angle of the to-be-positioned apparatus for the first time, the positioning apparatus may first predict an orientation angle of the to-be-positioned apparatus at the second moment based on an orientation angle of the to-be-positioned apparatus at a third moment and the movement parameter of the to-be-positioned apparatus, and determine the plurality of rotation angles based on the orientation angle at the second moment. In this case, the local grid does not need to be rotated by one circle with the location of the to-be-positioned apparatus as a center, to obtain the plurality of rotation angles, but the local grid is rotated with the location of the to-be-positioned apparatus as a center and near the orientation angle at the second moment, to obtain the plurality of rotation angles. For example, an included angle between each of the plurality of rotation angles and the orientation angle at the second moment is less than or equal to the first angle. In this way, calculation overheads of the positioning apparatus can be reduced, and precision of the determined orientation angle of the to-be-positioned apparatus can be improved.

The third moment is a moment at which the positioning apparatus determines the orientation angle for the to-be-positioned apparatus last time. The orientation angle at the third moment is an orientation angle, of the to-be-positioned apparatus on the grid map, that is determined by the positioning apparatus last time. The third moment and the first moment may be the same or different. The orientation angle of the to-be-positioned apparatus on the grid map may indicate a movement direction of the to-be-positioned apparatus on the grid map. The second moment is the current moment. The orientation angle at the second moment is an orientation angle of the to-be-positioned apparatus on the grid map at the current moment. In other words, the positioning apparatus may predict the orientation angle of the to-be-positioned apparatus on the grid map at the current moment based on the orientation angle, of the to-be-positioned apparatus, that is determined last time and the movement parameter of the to-be-positioned apparatus. For descriptions of the movement parameter, refer to corresponding descriptions in S305. Details are not described herein.

It may be understood that, after obtaining the movement parameter, the positioning apparatus may obtain a parameter such as an angular velocity of the to-be-positioned apparatus based on the movement parameter. Optionally, the positioning apparatus may further obtain a linear velocity of the to-be-positioned apparatus, a rotation angle of the wheel of the to-be-positioned apparatus, and the like based on the movement parameter.

In a possible implementation, the orientation angle $\theta_{t3}$ of the to-be-positioned apparatus at the third moment and the predicted orientation angle $\theta_{t2}$ of the to-be-positioned apparatus at the second moment meet a formula: $\theta_{t2} = \theta_{t3} + \omega\Delta t$, where $\omega$ is the angular velocity of the to-be-positioned apparatus, and $\Delta t$ is a difference between the second moment and the third moment.

It may be understood that the first grid or the second grid corresponds to the plurality of types of attribute information. The positioning apparatus may determine, based on each type of attribute information, a second matching probability corresponding to each type of attribute information. For example, the positioning apparatus obtains, based on attribute information of the grid in the local grid and attribute information of the grid on the grid map, the second matching probability corresponding to each type of attribute information of the local grid corresponding to the plurality of rotation angles.

In a possible implementation, the positioning apparatus obtains, based on attribute information of a grid in a local grid corresponding to a first rotation angle and the attribute information of the grid on the grid map, a second matching probability corresponding to each type of attribute information of the first rotation angle. The first rotation angle is any rotation angle of the plurality of rotation angles, and the second matching probability corresponding to each type of attribute information of the first rotation angle is a matching probability between each type of attribute information of the grid in the local grid corresponding to the first rotation angle and each type of attribute information of the grid on the grid map. Specifically, the positioning apparatus obtains a second deviation between first attribute information of each second grid in the local grid and first attribute information of a first grid corresponding to the second grid when the local grid is located at the location of the to-be-positioned apparatus and the local grid is rotated by the first rotation angle, and obtains, based on the second deviation, a second matching probability corresponding to first attribute information of the first rotation angle. The first attribute information of the second grid is any piece of attribute information in the attribute information of the second grid, and an attribute of the first attribute information of the first grid is the same as that of the first attribute information of the second grid. It may be understood that a process in which the positioning apparatus obtains the second deviation and obtains, based on the second deviation, a second matching probability corresponding to first attribute information of the first rotation angle is similar to a process in which the positioning apparatus obtains the first deviation and obtains, based on the first deviation, the first matching probability corresponding to the first attribute information of the first grid on the grid map in S303. For details, refer to corresponding descriptions in S303. Details are not described herein.

In a possible implementation, the positioning apparatus may further obtain a second prediction probability corresponding to each type of attribute information of the first rotation angle, so that the positioning apparatus determines, based on the second matching probability and the second prediction probability that correspond to each type of attribute information of the first rotation angle, a second posterior probability corresponding to each type of attribute information of the first rotation angle, and further determines the orientation angle of the to-be-positioned apparatus based on the second posterior probability corresponding to each type of attribute information of the first rotation angle.

In a possible design, if the positioning apparatus determines the location of the to-be-positioned apparatus for the first time, the second prediction probability corresponding to each type of attribute information of the first rotation angle is a preset initial value, for example, 1/360.

In another possible design, if the positioning apparatus does not determine the location of the to-be-positioned apparatus for the first time, the second prediction probability corresponding to the first attribute information of the first

$$\overline{k}(\theta_i) = \eta k(\theta_0 \mid z, m) \exp(-\frac{(\theta_i - \theta_0)^2}{2\sigma^2})$$

rotation angle meets a formula:                                                                                       .

$\overline{k}(\theta_i)$ is the second prediction probability corresponding to the attribute information of the first rotation angle, $\eta$ is a constant, $k(\theta_0|z,m)$ is a second posterior probability that corresponds to the first attribute information of the to-be-positioned apparatus when the orientation angle of the to-be-positioned apparatus on the grid map is $\theta_0$ and that is obtained last time, $\theta_0$ is an orientation angle that is of the to-be-positioned apparatus at a current moment on the grid map and that is predicted by the to-be-positioned apparatus based on an orientation angle of the to-be-positioned apparatus at a previous moment and the movement parameter of the to-be-positioned apparatus, $\theta_i$ is an orientation angle of the to-be-positioned apparatus corresponding to the first rotation angle, and $\sigma$ is a variance.

S307: The positioning apparatus determines the orientation angle of the to-be-positioned apparatus based on the second matching probability.

In a possible implementation, the positioning apparatus determines, based on the second matching probability corresponding to each type of attribute information of each rotation angle, orientation angle information corresponding to each type of attribute information, and determines the orientation angle of the to-be-positioned apparatus based on the orientation angle information corresponding to each type of attribute information. Specifically, the positioning apparatus determines, based on the second matching probability and the second prediction probability that correspond to each type of attribute information of each rotation angle, the second posterior probability corresponding to each type of attribute information of each rotation angle, determines, based on the second posterior probability corresponding to each type of attribute information of each rotation angle, the orientation angle information corresponding to each type of attribute information, and determines the orientation angle of the to-be-positioned apparatus based on the orientation angle information corresponding to each type of attribute information.

In an example, the second posterior probability corresponding to the first attribute information of the first rotation angle meets a formula: $k(\theta_i|z, m) = \overline{k}(\theta_i)k(z|\theta_i,m)$. $k(\theta_i|z,m)$ is the second posterior probability corresponding to the first attribute information of the first rotation angle, $\overline{k}(\theta_i)$ is the second prediction probability corresponding to the first attribute information of the first rotation angle, and $k(z|\theta_i,m)$ is the second matching probability corresponding to the first attribute information of the first rotation angle. The orientation angle information corresponding to the first attribute information

$$\overline{\theta}_k = \frac{\sum\limits_{i=1}^{j} k(\theta_i \mid z,m)\theta_i}{\sum\limits_{i=1}^{j} k(\theta_i \mid z,m)}$$

meets a formula:                                                                       . $\overline{\theta}_k$ is the orientation angle indicated by the orientation angle information corresponding to the first attribute information, namely, the orientation angle that is of the to-be-positioned apparatus and that is determined based on the first attribute information, $\theta_i$ is an orientation angle that is of the to-be-positioned apparatus and that corresponds to an $i^{th}$ rotation angle of the plurality of rotation angles, and j is a quantity of the plurality of rotation angles.

In a possible implementation, the positioning apparatus performs weighted summation on the orientation angle information corresponding to each type of attribute information, to obtain the orientation angle of the to-be-positioned apparatus. For descriptions of a weight corresponding to each type of attribute information, refer to corresponding descriptions in S304. Details are not described herein.

In an example, the orientation angle of the to-be-positioned apparatus meets the following formula:

$$\theta = \frac{w_p \overline{\theta_p} + w_h \overline{\theta_h} + w_a \overline{\theta_a}}{w_p + w_h + w_a}$$

. $\theta$ is the orientation angle that is of the to-be-positioned apparatus and that is determined by the positioning apparatus, $w_p$ is a weight corresponding to the semantic information, $w_h$ is a weight corresponding to the height information, and $w_a$ is a weight corresponding to the reflection strength information. $\overline{\theta_p}$ is an orientation angle that is of the to-be-positioned apparatus and that is determined based on the semantic information, $\overline{\theta_h}$ is an orientation angle that is of the to-be-positioned apparatus and that is determined based on the height information, and $\overline{\theta_a}$ is an orientation angle that is of the to-be-positioned apparatus and that is determined based on the reflection strength information.

It should be noted that the positioning apparatus may not determine the second posterior probability corresponding to each type of attribute information of the plurality of rotation angles, but directly determine, based on the second matching probability corresponding to each type of attribute information of the plurality of rotation angles, the orientation angle information corresponding to each type of attribute information, and then determine the orientation angle of the to-be-positioned apparatus based on the orientation angle information corresponding to each type of attribute information. It should be understood that the second posterior probability corresponding to the attribute information is obtained after considering the second prediction probability corresponding to the attribute information. Therefore, the orientation angle, of the to-be-positioned apparatus, that is determined based on the second posterior probability corresponding to each type of attribute information of the plurality of rotation angles is more accurate than the orientation angle that is of the to-be-positioned apparatus and that is determined directly based on the second matching probability corresponding to each type of attribute information of the plurality of rotation angles.

It may be understood that the actions of the positioning apparatus in S301 to S307 may be performed by the processor 201 in the positioning apparatus 20 shown in FIG. 2 by invoking the application program code stored in the memory 203. This is not limited in this embodiment of this application.

Optionally, as shown in FIG. 10, in a possible implementation of the method shown in FIG. 3, S301 may include S3011 and S3012.

S3011: The positioning apparatus obtains the information about the point cloud corresponding to the first environment.

The information about the point cloud corresponding to the first environment may indicate location information of the point in the point cloud corresponding to the first environment, for example, coordinates of the point in the point cloud corresponding to the first environment on a three-dimensional map. The three-dimensional map may be a point cloud map.

Optionally, the information about the point cloud corresponding to the first environment further indicates reflection strength of the point in the point cloud corresponding to the first environment.

In an example, the positioning apparatus obtains, through the sensing apparatus, the information about the point cloud corresponding to the first environment. The sensing apparatus may be deployed on the positioning apparatus, or may not be deployed on the positioning apparatus. For example, the sensing apparatus is lidar. The lidar may move in the first environment, transmit a laser, and collect the information about the point cloud in the first environment. The information about the point cloud in the first environment is sent to the positioning apparatus, and the positioning apparatus obtains, based on an SLAM algorithm such as a lightweight and ground optimized lidar odometry and mapping (lightweight and ground optimized lidar odometry and mapping, Lego-Loam) algorithm, the point cloud map corresponding to the first environment. The point cloud in the first environment is a point cloud obtained by reflecting the lidar by an object in the first environment. Reflection strength of the point in the point cloud corresponding to the first environment is reflection strength of the point for the laser.

In a possible implementation, when the information about the point cloud is collected by using the lidar, the information about the point cloud may be collected once at a specific distance.

It may be understood that point clouds collected by using the lidar are usually dense, and an excessive quantity of point clouds causes difficulty in subsequent segmentation. Therefore, down-sampling may be performed on a point cloud collected each time through a voxel grid filter in the point cloud library. The voxel grid filter can achieve a function of down-sampling without damaging a geometric structure of the point cloud. After down-sampling, a quantity of points in the point cloud collected each time can be reduced, and a shape feature of the point cloud can be maintained at the same time.

S3012: The positioning apparatus obtains, based on the information about the point cloud corresponding to the first environment, the grid map corresponding to the first environment.

In a possible implementation, the positioning apparatus performs projection (for example, projection to the ground) on the point cloud map corresponding to the first environment to obtain a two-dimensional map corresponding to the first environment, and divides the two-dimensional map into a plurality of first grids, to obtain the grid map corresponding to the first environment. A height of each point on the grid map is a value of a vertical coordinate (z coordinate) of the point on the point cloud map. Reflection strength of each point on the grid map is reflection strength of the point to the laser.

In a possible implementation, the semantic information of the first grid may be determined based on the semantic information of the point in the first grid. The semantic information of the point in the first grid is a probability that an object to which the point belongs (or an object corresponding to the point) is each of the plurality of types of objects.

In an example, the semantic information of the first grid meets a formula: $p_m[i] = \lambda count(label_i)_1 / M$. $p_m[i]$ is a probability that the first grid represents any one of the plurality of types of objects, $\lambda$ is a constant, $count(label_i)_1$ is a quantity of points that belong to the any one object in the first grid, and M is a quantity of points in the first grid.

In a possible implementation, the probability that the object to which the point belongs (or the object corresponding to the point) is each of the plurality of types of objects may be obtained by inputting the point in the first grid into a semantic model.

In a possible implementation, the semantic model may be stored in the positioning apparatus. Alternatively, the semantic model may be obtained by the positioning apparatus through training before S3012. For example, the positioning apparatus may perform training by using PointNet based on a plurality of types of objects marked in advance, to obtain the semantic model.

The actions of the positioning apparatus in S3011 and S3012 may be performed by the processor 201 in the positioning apparatus 20 shown in FIG. 2 by invoking the application program code stored in the memory 203. This is not limited in this embodiment of this application.

Optionally, as shown in FIG. 11, in a possible implementation of the method shown in FIG. 3, S302 may include S3021 and S3022.

S3021: The positioning apparatus obtains the information about the point cloud corresponding to the second environment.

The information about the point cloud corresponding to the second environment may indicate the location information of the point in the point cloud corresponding to the second environment, for example, coordinates of the point in the point cloud corresponding to the second environment on the three-dimensional map. The three-dimensional map may be a point cloud map.

Optionally, the information about the point cloud corresponding to the second environment further indicates reflection strength of the point in the point cloud corresponding to the second environment.

In an example, the sensing apparatus is deployed on the to-be-positioned apparatus, and the information about the point cloud corresponding to the second environment is obtained through the sensing apparatus. For example, the sensing apparatus is lidar. The to-be-positioned apparatus may move in the first environment. When the to-be-positioned apparatus moves to the second environment, the lidar emits a laser, to collect the information about the point cloud in the second environment. If the to-be-positioned apparatus is the same as the positioning apparatus, the to-be-positioned apparatus obtains, based on an SLAM algorithm such as a Lego-Loam algorithm, the point cloud map corresponding to the second environment. If the to-be-positioned apparatus is different from the positioning apparatus, the to-be-positioned apparatus sends the information about the point cloud in the second environment to the positioning apparatus, and the positioning apparatus obtains, based on an SLAM algorithm such as a Lego-Loam algorithm, the point cloud map corresponding to the second environment. The point cloud in the second environment is a point cloud obtained by reflecting the lidar by an object in the second environment. Reflection strength of the point in the point cloud corresponding to the second environment is reflection strength of the point for the laser.

In a possible implementation, when the information about the point cloud is collected by using the lidar, the information about the point cloud may be collected once at a specific distance.

It may be understood that point clouds collected by using the lidar are usually dense, and an excessive quantity of point clouds causes difficulty in subsequent segmentation. Therefore, down-sampling may be performed on a point cloud collected each time through a voxel grid filter in the point cloud library.

S3022: The positioning apparatus obtains, based on the information about the point cloud corresponding to the second environment, the local grid corresponding to the second environment.

In a possible implementation, the positioning apparatus performs projection (for example, projection to the ground) on the point cloud map corresponding to the second environment to obtain a two-dimensional map corresponding to the second environment, and divides the two-dimensional map into a plurality of second grids, to obtain the local grid corresponding to the second environment. A height of each point in the local grid is a value of a vertical coordinate (z coordinate) of the point on the point cloud map. Reflection strength of each point in the local grid is reflection strength of the point to the laser.

In a possible implementation, the semantic information of the second grid may be determined based on the semantic information of the point in the second grid. The semantic information of the point in the second grid is a probability that an object to which the point belongs (or an object corresponding to the point) is each of the plurality of types of objects.

In an example, the semantic information of the second grid meets a formula: $p[i] = \lambda count(label_i)_2 / W$. $p[i]$ is a probability that the second grid represents any one of the plurality of types of objects, $\lambda$ is a constant, $count(label_i)_2$ is a quantity of points that belong to the any one object in the second grid, and W is a quantity of points in the second grid.

In a possible implementation, the probability that the object to which the point belongs (or the object corresponding to the point) is each of the plurality of types of objects may be obtained by inputting the point in the second grid into a semantic model. For descriptions of the semantic model, refer to corresponding descriptions in S3012. Details are not described herein.

The actions of the positioning apparatus in S3021 and S3022 may be performed by the processor 201 in the positioning apparatus 20 shown in FIG. 2 by invoking the application program code stored in the memory 203. This is not limited in this embodiment of this application.

It may be understood that, in the foregoing embodiments, the methods and/or the steps implemented by the positioning apparatus may alternatively be implemented by a component (for example, a chip or a circuit) that can be used in the positioning apparatus. This is not limited.

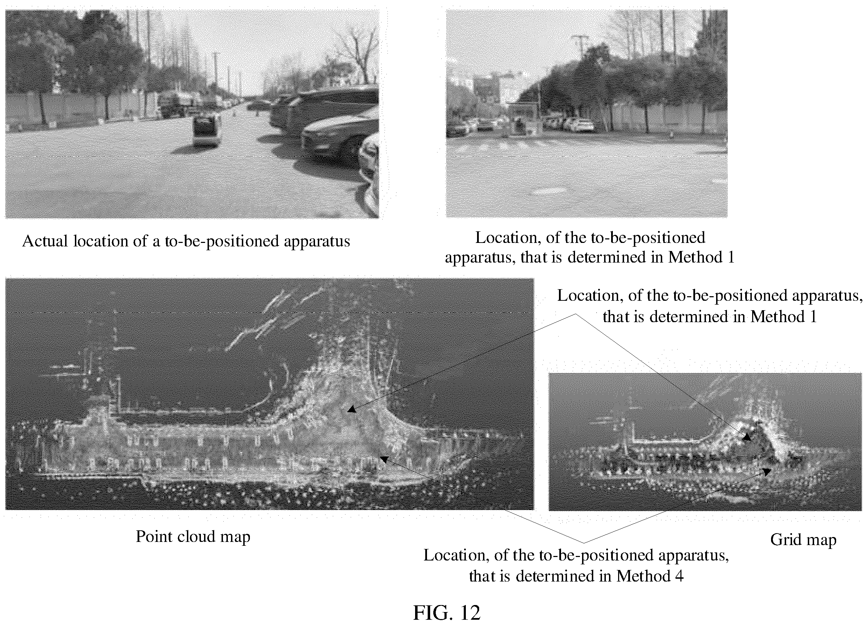

To verify positioning precision of several positioning methods provided in embodiments of this application, Method 1, Method 2, and Method 4 are used to separately perform positioning on the to-be-positioned apparatuses at four locations, and 50 positioning results at different moments are collected. A positioning result obtained after statistics collection is shown in Table 1. In Table 1, for a location 1, namely, an actual location of the to-be-positioned apparatus shown in FIG. 12, in 50 times of positioning, a proportion of a positioning error less than 10 cm when the to-be-positioned apparatus is positioned in Method 1 is 58.9%, a proportion of a positioning error less than 10 cm when the to-be-positioned apparatus is positioned in Method 2 is 68.1%, and a proportion of a positioning error less than 10 cm when the to-be-positioned apparatus is positioned in Method 4 is 92.0%. FIG. 12 shows a positioning result of positioning performed in Method 1 and a positioning result of positioning performed in Method 4. Because scenarios of parking lots are similar, a misjudgment occurs in Method 1, causing inaccurate positioning. However, the positioning result in Method 4 is consistent with the actual location of the to-be-positioned apparatus. For a location 2, in 50 times of positioning, a proportion of a positioning error less than 10 cm when the to-be-positioned apparatus is positioned in Method 1 is 76.2%, a proportion of a positioning error less than 10 cm when the to-be-positioned apparatus is positioned in Method 2 is 86.3%, and a proportion of a positioning error less than 10 cm when the to-be-positioned apparatus is positioned in Method 4 is 93.9%. For a location 3, in 50 times of positioning, a proportion of a positioning error less than 10 cm when the to-be-positioned apparatus is positioned in Method 1 is 56.3%, a proportion of a positioning error less than 10 cm when the to-be-positioned apparatus is positioned in Method 2 is 66.8%, and a proportion of a positioning error less than 10 cm when the to-be-positioned apparatus is positioned in Method 4 is 91.3%. For a location 4, in 50 times of positioning, a proportion of a positioning error less than 10 cm when the to-be-positioned apparatus is positioned in Method 1 is 67.1%, a proportion of a positioning error less than 10 cm when the to-be-positioned apparatus is positioned in Method 2 is 85%, and a proportion of a positioning error less than 10 cm when the to-be-positioned apparatus is positioned in Method 4 is 94.2%. It can be learned that positioning precision of Method 4 is clearly better than that of Method 1 and Method 2.

Table 1

|          | Location 1 | Location 2 | Location 3 | Location 4 |
|----------|-----------|-----------|-----------|-----------|
| Method 1 | 58.9%     | 76.2%     | 56.3%     | 67.1%     |
| Method 2 | 68.1%     | 86.3%     | 66.8%     | 85%       |
| Method 4 | 92.0%     | 93.9%     | 91.3%     | 94.2%     |

It may be understood that the attribute information in this embodiment of this application may be used for environment perception of autonomous driving in addition to positioning. For example, a feature that is not easy to change in an environment may be extracted and used as attribute information, to model the environment, or an object in the environment may be identified based on a process of obtaining semantic information in this embodiment of this application, to implement motion estimation of a dynamic object in the environment, and provide a condition for path planning and obstacle avoidance of autonomous driving.

An embodiment of this application further provides a positioning apparatus. The positioning apparatus may be the positioning apparatus in the foregoing method embodiment, or an apparatus including the foregoing positioning apparatus, or a component that may be used in the foregoing positioning apparatus. It may be understood that, to implement the foregoing functions, the foregoing positioning apparatus includes a corresponding hardware structure and/or software module for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the positioning apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

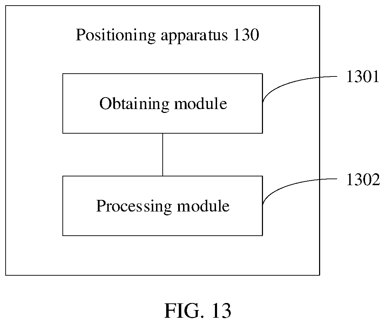

For example, when the functional modules are obtained through division in an integrated manner, FIG. 13 is a schematic diagram of a structure of a positioning apparatus 130. The positioning apparatus 130 includes an obtaining module 1301 and a processing module 1302.

For example, the positioning apparatus 130 is configured to implement a function of the positioning apparatus. For example, the positioning apparatus 130 is the terminal in the embodiment shown in FIG. 3, the embodiment shown in FIG. 5, the embodiment shown in FIG. 8, the embodiment shown in FIG. 10, or the embodiment shown in FIG. 11.

The obtaining module 1301 is configured to obtain a grid map corresponding to a first environment, where the grid map includes a plurality of first grids, the first grid includes a plurality of points, location information of the plurality of points, and attribute information of the first grid, the attribute information of the first grid includes semantic information of the first grid and height information of the first grid, the semantic information of the first grid indicates a probability that the first grid represents each of a plurality of types of objects, and the height information of the first grid indicates a height of the point included in the first grid.

The obtaining module 1301 is further configured to obtain a local grid corresponding to a second environment, where the second environment is included in the first environment, the local grid includes at least one second grid, the second grid includes a plurality of points and attribute information of the second grid, the attribute information of the second grid includes semantic information of the second grid and height information of the second grid, the semantic information of the second grid indicates a probability that the second grid represents each of a plurality of types of objects, and the height information of the second grid indicates a height of the point included in the second grid.

The obtaining module 1301 is further configured to obtain a first matching probability, where the first matching probability is a matching probability between the local grid and a grid on the grid map when the local grid is located at a different location on the grid map.

The processing module 1302 is configured to determine a location of a to-be-positioned apparatus based on the first matching probability, where the to-be-positioned apparatus is located in the second environment.

In a possible implementation, the attribute information of the first grid further includes reflection strength information of the first grid, and the reflection strength information of the first grid indicates reflection strength of the point included in the first grid; and the attribute information of the second grid further includes reflection strength information of the second grid, and the reflection strength information of the second grid indicates reflection strength of the point included in the second grid.

In a possible implementation, the processing module 1302 is further configured to predict, based on pose information of the to-be-positioned apparatus at a first moment and a movement parameter of the to-be-positioned apparatus, a first area corresponding to a location of the to-be-positioned apparatus at a second moment.

In a possible implementation, the obtaining module 1301 is specifically configured to obtain the first matching probability between the local grid and the grid on the grid map when the local grid is located in a grid in the first area.

In a possible implementation, the obtaining module 1301 is specifically configured to obtain, based on attribute information of a grid in the local grid and attribute information of the grid in the first area, a first matching probability corresponding to each type of attribute information of a first grid in the first area.

In a possible implementation, the obtaining module 1301 is specifically configured to obtain a first deviation between first attribute information of the second grid in the local grid and first attribute information of the first grid corresponding to the second grid when the local grid is located in the first grid in the first area, where the first attribute information of the second grid is any piece of attribute information in the attribute information of the second grid, and an attribute of the first attribute information of the first grid is the same as that of the first attribute information of the second grid. The obtaining module 1301 is further specifically configured to obtain, based on the first deviation, a first matching probability corresponding to the first attribute information of the first grid in the first area.

In a possible implementation, the processing module 1302 is specifically configured to determine, based on the first matching probability corresponding to each type of attribute information of the first grid in the first area, location information corresponding to each type of attribute information. The processing module 1302 is further specifically configured to determine the location of the to-be-positioned apparatus based on the location information corresponding to each type of attribute information.

In a possible implementation, the processing module 1302 is further specifically configured to determine, in the location information corresponding to each type of attribute information, location information corresponding to at least one type of attribute information that meets a preset rule. The processing module 1302 is further specifically configured to: if a quantity of the at least one type of attribute information is greater than 1, perform weighted summation on the location information corresponding to the at least one type of attribute information, to obtain the location of the to-be-positioned apparatus; or if a quantity of the at least one type of attribute information is equal to 1, determine the location information corresponding to the at least one type of attribute information as the location of the to-be-positioned apparatus.

In a possible implementation, the obtaining module 1301 is further configured to obtain a second matching probability, where the second matching probability is a matching probability between the local grid and the grid on the grid map when the local grid is located at the location of the to-be-positioned apparatus and the local grid is rotated by a different angle. The processing module 1302 is further configured to determine an orientation angle of the to-be-positioned apparatus based on the second matching probability.

In a possible implementation, the processing module 1302 is further configured to predict an orientation angle of the to-be-positioned apparatus at the second moment based on an orientation angle of the to-be-positioned apparatus at a third moment and the movement parameter of the to-be-positioned apparatus.

In a possible implementation, the obtaining module 1301 is specifically configured to obtain second matching probabilities of a plurality of rotation angles corresponding to the local grid when the local grid is located at the location of the to-be-positioned apparatus, where an included angle between each of the plurality of rotation angles and the predicted orientation angle of the to-be-positioned apparatus at the second moment is less than or equal to a first angle.

In a possible implementation, the obtaining module 1301 is specifically configured to obtain, based on attribute information of a grid in a local grid corresponding to the first rotation angle and the attribute information of the grid on the grid map, a second matching probability corresponding to each type of attribute information of the first rotation angle, where the first rotation angle is any rotation angle of the plurality of rotation angles.

In a possible implementation, the obtaining module 1301 is specifically configured to obtain a second deviation between first attribute information of each second grid in the local grid and first attribute information of a first grid corresponding to the second grid when the local grid is located at the location of the to-be-positioned apparatus and the local grid is rotated by the first rotation angle, where the first attribute information of the second grid is any piece of attribute information in the attribute information of the second grid, and an attribute of the first attribute information of the first grid is the same as that of the first attribute information of the second grid. The obtaining module 1301 is further specifically configured to obtain, based on the second deviation, a second matching probability corresponding to first attribute information of the first rotation angle.

In a possible implementation, the processing module 1302 is specifically configured to determine, based on a second matching probability corresponding to each type of attribute information of each rotation angle, orientation angle information corresponding to each type of attribute information. The processing module 1302 is further specifically configured to perform weighted summation on the orientation angle information corresponding to each type of attribute information, to obtain the orientation angle of the to-be-positioned apparatus.

In a possible implementation, the obtaining module 1301 is specifically configured to obtain information about a point cloud corresponding to the first environment, where the information about the point cloud corresponding to the first environment indicates location information of a point in the point cloud corresponding to the first environment. The obtaining module 1301 is specifically configured to obtain, based on the information about the point cloud corresponding to the first environment, the grid map corresponding to the first environment.

In a possible implementation, the information about the point cloud corresponding to the first environment further indicates reflection strength of the point in the point cloud corresponding to the first environment.

In a possible implementation, the obtaining module 1301 is specifically configured to obtain information about a point cloud corresponding to the second environment, where the information about the point cloud corresponding to the second environment indicates location information of a point in the point cloud corresponding to the second environment. The obtaining module 1301 is further specifically configured to obtain, based on the information about the point cloud corresponding to the second environment, the local grid corresponding to the second environment.

In a possible implementation, the information about the point cloud corresponding to the second environment further indicates reflection strength of the point in the point cloud corresponding to the second environment.

When the positioning apparatus is configured to implement a function of the foregoing positioning apparatus, for other functions that can be implemented by the positioning apparatus 130, refer to related descriptions of the embodiment shown in FIG. 3, the embodiment shown in FIG. 5, the embodiment shown in FIG. 8, the embodiment shown in FIG. 10, or the embodiment shown in FIG. 11. Details are not described.

In a simple embodiment, a person skilled in the art may figure out that the positioning apparatus 130 may be in the form shown in FIG. 2. For example, the processor 201 in FIG. 2 may invoke the computer-executable instructions stored in the memory 203, to enable the positioning apparatus 130 to perform the method in the foregoing method embodiments.

For example, functions/implementation processes of the obtaining module 1301 and the processing module 1302 in FIG. 13 may be implemented by the processor 201 in FIG. 2 by invoking the computer-executable instructions stored in the memory 203.

It should be noted that one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instructions and implement the foregoing method procedure. The processor may be built into a SoC (system-on-a-chip) or an ASIC, or may be an independent semiconductor chip. In addition to a core configured to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing module or unit is implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware can run necessary software or perform the foregoing method procedure without depending on software.

Optionally, an embodiment of this application further provides a chip system. The chip system includes at least one processor and an interface. The at least one processor is coupled to a memory through the interface. When the at least one processor executes a computer program or instructions in the memory, the method according to any one of the foregoing method embodiments is performed. In a possible implementation, the chip system further includes the memory. Optionally, the chip system may include a chip, or may include a chip and another discrete component. This is not specifically limited in embodiments of this application.

Optionally, an embodiment of this application further provides a computer-readable storage medium. All or some of the procedures in the foregoing method embodiments may be implemented by a computer program instructing related hardware. The program may be stored in the computer-readable storage medium. When the program is executed, the procedures of the foregoing method embodiments may be included. The computer-readable storage medium may be an internal storage unit of the positioning apparatus in any one of the foregoing embodiments, for example, a hard disk or memory of the positioning apparatus. Alternatively, the computer-readable storage medium may be an external storage device of the positioning apparatus, for example, a plug-in hard disk, a smart media card (smart media card, SMC), a secure digital (secure digital, SD) card, or a flash card (flash card) that is configured on the positioning apparatus. Further, the computer-readable storage medium may alternatively include both the internal storage unit and the external storage device of the positioning apparatus. The computer-readable storage medium is configured to store the computer program and other programs and data that are required by the positioning apparatus. The computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the computer program product. When the program is executed, the procedures of the foregoing method embodiments may be included.

Optionally, an embodiment of this application further provides computer instructions. All or some of the procedures in the foregoing method embodiments may be implemented by computer instructions instructing related hardware (such as a computer, a processor, an access network device, a mobility management network element, or a session management network element). The program may be stored in the computer-readable storage medium or the computer program product.

Based on the descriptions of the implementations, a person skilled in the art may clearly understand that for the purpose of convenient and brief descriptions, division into the foregoing functional modules is merely used as an example for descriptions. During actual application, the functions may be allocated to different functional modules for implementation based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1.  A positioning method, wherein the method comprises:

    obtaining a grid map corresponding to a first environment, wherein the grid map comprises a plurality of first grids, the first grid comprises a plurality of points, location information of the plurality of points, and attribute information of the first grid, the attribute information of the first grid comprises semantic information of the first grid and height information of the first grid, the semantic information of the first grid indicates a probability that the first grid represents each of a plurality of types of objects, and the height information of the first grid indicates a height of the point comprised in the first grid;

    obtaining a local grid corresponding to a second environment, wherein the second environment is comprised in the first environment, the local grid comprises at least one second grid, the second grid comprises a plurality of points and attribute information of the second grid, the attribute information of the second grid comprises semantic information of the second grid and height information of the second grid, the semantic information of the second grid indicates a probability that the second grid represents each of a plurality of types of objects, and the height information of the second grid indicates a height of the point comprised in the second grid;

    obtaining a first matching probability, wherein the first matching probability is a matching probability between the local grid and a grid on the grid map when the local grid is located at a different location on the grid map; and

    determining a location of a to-be-positioned apparatus based on the first matching probability, wherein the to-be-positioned apparatus is located in the second environment.

2.  The method according to claim 1, wherein

    the attribute information of the first grid further comprises reflection strength information of the first grid, and the reflection strength information of the first grid indicates reflection strength of the point comprised in the first grid; and

    the attribute information of the second grid further comprises reflection strength information of the second grid, and the reflection strength information of the second grid indicates reflection strength of the point comprised in the second grid.

3.  The method according to claim 1 or 2, wherein the method further comprises:
    predicting, based on pose information of the to-be-positioned apparatus at a first moment and a movement parameter of the to-be-positioned apparatus, a first area corresponding to a location of the to-be-positioned apparatus at a second moment.

4.  The method according to claim 3, wherein the obtaining a first matching probability comprises:
    obtaining the first matching probability between the local grid and the grid on the grid map when the local grid is located in a grid in the first area.

5.  The method according to claim 4, wherein the obtaining the first matching probability between the local grid and the grid on the grid map when the local grid is located in a grid in the first area comprises:
    obtaining, based on attribute information of a grid in the local grid and attribute information of the grid in the first area, a first matching probability corresponding to each type of attribute information of a first grid in the first area.

6.  The method according to claim 5, wherein the obtaining, based on attribute information of a grid in the local grid and attribute information of the grid in the first area, a first matching probability corresponding to first attribute information of the first grid in the first area comprises:

> obtaining a first deviation between first attribute information of the second grid in the local grid and first attribute information of the first grid corresponding to the second grid when the local grid is located in the first grid in the first area, wherein the first attribute information of the second grid is any piece of attribute information in the attribute information of the second grid, and an attribute of the first attribute information of the first grid is the same as that of the first attribute information of the second grid; and
> obtaining, based on the first deviation, a first matching probability corresponding to the first attribute information of the first grid in the first area.

7. The method according to claim 5 or 6, wherein the determining a location of a to-be-positioned apparatus based on the first matching probability comprises:

> determining, based on the first matching probability corresponding to each type of attribute information of the first grid in the first area, location information corresponding to each type of attribute information; and
> determining the location of the to-be-positioned apparatus based on the location information corresponding to each type of attribute information.

8. The method according to claim 7, wherein the determining a location of a to-be-positioned apparatus based on the first matching probability further comprises:

> determining, in the location information corresponding to each type of attribute information, location information corresponding to at least one type of attribute information that meets a preset rule; and
> the determining the location of the to-be-positioned apparatus based on the location information corresponding to each type of attribute information comprises:
>
> > if a quantity of the at least one type of attribute information is greater than 1, performing weighted summation on the location information corresponding to the at least one type of attribute information, to obtain the location of the to-be-positioned apparatus; or
> > if a quantity of the at least one type of attribute information is equal to 1, determining the location information corresponding to the at least one type of attribute information as the location of the to-be-positioned apparatus.

9. The method according to any one of claims 1 to 8, wherein the method further comprises:

> obtaining a second matching probability, wherein the second matching probability is a matching probability between the local grid and the grid on the grid map when the local grid is located at the location of the to-be-positioned apparatus and the local grid is rotated by a different angle; and
> determining an orientation angle of the to-be-positioned apparatus based on the second matching probability.

10. The method according to claim 9, wherein the method further comprises:
predicting an orientation angle of the to-be-positioned apparatus at the second moment based on an orientation angle of the to-be-positioned apparatus at a third moment and the movement parameter of the to-be-positioned apparatus.

11. The method according to claim 10, wherein the obtaining a second matching probability comprises:
obtaining second matching probabilities of a plurality of rotation angles corresponding to the local grid when the local grid is located at the location of the to-be-positioned apparatus, wherein an included angle between each of the plurality of rotation angles and the predicted orientation angle of the to-be-positioned apparatus at the second moment is less than or equal to a first angle.

12. The method according to claim 11, wherein the obtaining a second matching probability of a first rotation angle when the local grid is located at the location of the to-be-positioned apparatus comprises:
obtaining, based on attribute information of a grid in a local grid corresponding to the first rotation angle and the attribute information of the grid on the grid map, a second matching probability corresponding to each type of attribute information of the first rotation angle, wherein the first rotation angle is any rotation angle of the plurality of rotation angles.

13. The method according to claim 12, wherein the obtaining, based on attribute information of a grid in a local grid corresponding to the first rotation angle and the attribute information of the grid on the grid map, a second matching probability corresponding to first attribute information of the first rotation angle comprises:

   obtaining a second deviation between first attribute information of each second grid in the local grid and first attribute information of a first grid corresponding to the second grid when the local grid is located at the location of the to-be-positioned apparatus and the local grid is rotated by the first rotation angle, wherein the first attribute information of the second grid is any piece of attribute information in the attribute information of the second grid, and an attribute of the first attribute information of the first grid is the same as that of the first attribute information of the second grid; and
   obtaining, based on the second deviation, a second matching probability corresponding to first attribute information of the first rotation angle.

14. The method according to claim 12 or 13, wherein the determining an orientation angle of the to-be-positioned apparatus based on the second matching probability comprises:

   determining, based on a second matching probability corresponding to each type of attribute information of each rotation angle, orientation angle information corresponding to each type of attribute information; and
   performing weighted summation on the orientation angle information corresponding to each type of attribute information, to obtain the orientation angle of the to-be-positioned apparatus.

15. The method according to any one of claims 1 to 14, wherein the obtaining a grid map corresponding to a first environment comprises:

   obtaining information about a point cloud corresponding to the first environment, wherein the information about the point cloud corresponding to the first environment indicates location information of a point in the point cloud corresponding to the first environment; and
   obtaining, based on the information about the point cloud corresponding to the first environment, the grid map corresponding to the first environment.

16. The method according to claim 15, wherein the information about the point cloud corresponding to the first environment further indicates reflection strength of the point in the point cloud corresponding to the first environment.

17. The method according to any one of claims 1 to 16, wherein the obtaining a local grid corresponding to a second environment comprises:

   obtaining information about a point cloud corresponding to the second environment, wherein the information about the point cloud corresponding to the second environment indicates location information of a point in the point cloud corresponding to the second environment; and
   obtaining, based on the information about the point cloud corresponding to the second environment, the local grid corresponding to the second environment.

18. The method according to claim 17, wherein the information about the point cloud corresponding to the second environment further indicates reflection strength of the point in the point cloud corresponding to the second environment.

19. A positioning apparatus, wherein the positioning apparatus comprises an obtaining module and a processing module;

   the obtaining module is configured to obtain a grid map corresponding to a first environment, wherein the grid map comprises a plurality of first grids, the first grid comprises a plurality of points, location information of the plurality of points, and attribute information of the first grid, the attribute information of the first grid comprises semantic information of the first grid and height information of the first grid, the semantic information of the first grid indicates a probability that the first grid represents each of a plurality of types of objects, and the height information of the first grid indicates a height of the point comprised in the first grid;
   the obtaining module is further configured to obtain a local grid corresponding to a second environment, wherein the second environment is comprised in the first environment, the local grid comprises at least one second grid, the second grid comprises a plurality of points and attribute information of the second grid, the attribute information of the second grid comprises semantic information of the second grid and height information of the second grid, the semantic information of the second grid indicates a probability that the second grid represents each of a plurality of types of objects, and the height information of the second grid indicates a height of the point comprised in the second grid;

the obtaining module is further configured to obtain a first matching probability, wherein the first matching probability is a matching probability between the local grid and a grid on the grid map when the local grid is located at a different location on the grid map; and

the processing module is configured to determine a location of a to-be-positioned apparatus based on the first matching probability, wherein the to-be-positioned apparatus is located in the second environment.

20. The positioning apparatus according to claim 19, wherein

the attribute information of the first grid further comprises reflection strength information of the first grid, and the reflection strength information of the first grid indicates reflection strength of the point comprised in the first grid; and

the attribute information of the second grid further comprises reflection strength information of the second grid, and the reflection strength information of the second grid indicates reflection strength of the point comprised in the second grid.

21. The positioning apparatus according to claim 19 or 20, wherein
the processing module is further configured to predict, based on pose information of the to-be-positioned apparatus at a first moment and a movement parameter of the to-be-positioned apparatus, a first area corresponding to a location of the to-be-positioned apparatus at a second moment.

22. The positioning apparatus according to claim 21, wherein
the obtaining module is specifically configured to obtain the first matching probability between the local grid and the grid on the grid map when the local grid is located in a grid in the first area.

23. The positioning apparatus according to claim 22, wherein
the obtaining module is specifically configured to obtain, based on attribute information of a grid in the local grid and attribute information of the grid in the first area, a first matching probability corresponding to each type of attribute information of a first grid in the first area.

24. The positioning apparatus according to claim 23, wherein

the obtaining module is specifically configured to obtain a first deviation between first attribute information of the second grid in the local grid and first attribute information of the first grid corresponding to the second grid when the local grid is located in the first grid in the first area, wherein the first attribute information of the second grid is any piece of attribute information in the attribute information of the second grid, and an attribute of the first attribute information of the first grid is the same as that of the first attribute information of the second grid; and

The obtaining module is further specifically configured to obtain, based on the first deviation, a first matching probability corresponding to the first attribute information of the first grid in the first area.

25. The positioning apparatus according to claim 23 or 24, wherein

the processing module is specifically configured to determine, based on the first matching probability corresponding to each type of attribute information of the first grid in the first area, location information corresponding to each type of attribute information; and

the processing module is further specifically configured to determine the location of the to-be-positioned apparatus based on the location information corresponding to each type of attribute information.

26. The positioning apparatus according to claim 25, wherein

the processing module is further specifically configured to determine, in the location information corresponding to each type of attribute information, location information corresponding to at least one type of attribute information that meets a preset rule; and

the processing module is further specifically configured to: if a quantity of the at least one type of attribute information is greater than 1, perform weighted summation on the location information corresponding to the at least one type of attribute information, to obtain the location of the to-be-positioned apparatus; or if a quantity of the at least one type of attribute information is equal to 1, determine the location information corresponding to the at least one type of attribute information as the location of the to-be-positioned apparatus.

27. The positioning apparatus according to any one of claims 19 to 26, wherein

the obtaining module is further configured to obtain a second matching probability, wherein the second matching probability is a matching probability between the local grid and the grid on the grid map when the local grid is located at the location of the to-be-positioned apparatus and the local grid is rotated by a different angle; and the processing module is further configured to determine an orientation angle of the to-be-positioned apparatus based on the second matching probability.

28. The positioning apparatus according to claim 27, wherein
the processing module is further configured to predict an orientation angle of the to-be-positioned apparatus at the second moment based on an orientation angle of the to-be-positioned apparatus at a third moment and the movement parameter of the to-be-positioned apparatus.

29. The positioning apparatus according to claim 28, wherein
the obtaining module is specifically configured to obtain second matching probabilities of a plurality of rotation angles corresponding to the local grid when the local grid is located at the location of the to-be-positioned apparatus, wherein an included angle between each of the plurality of rotation angles and the predicted orientation angle of the to-be-positioned apparatus at the second moment is less than or equal to a first angle.

30. The positioning apparatus according to claim 29, wherein
the obtaining module is specifically configured to obtain, based on attribute information of a grid in a local grid corresponding to the first rotation angle and the attribute information of the grid on the grid map, a second matching probability corresponding to each type of attribute information of the first rotation angle, wherein the first rotation angle is any rotation angle of the plurality of rotation angles.

31. The positioning apparatus according to claim 30, wherein

the obtaining module is specifically configured to obtain a second deviation between first attribute information of each second grid in the local grid and first attribute information of a first grid corresponding to the second grid when the local grid is located at the location of the to-be-positioned apparatus and the local grid is rotated by the first rotation angle, wherein the first attribute information of the second grid is any piece of attribute information in the attribute information of the second grid, and an attribute of the first attribute information of the first grid is the same as that of the first attribute information of the second grid; and the obtaining module is further specifically configured to obtain, based on the second deviation, a second matching probability corresponding to first attribute information of the first rotation angle.

32. The positioning apparatus according to claim 30 or 31, wherein

the processing module is specifically configured to determine, based on a second matching probability corresponding to each type of attribute information of each rotation angle, orientation angle information corresponding to each type of attribute information; and the processing module is further specifically configured to perform weighted summation on the orientation angle information corresponding to each type of attribute information, to obtain the orientation angle of the to-be-positioned apparatus.

33. The positioning apparatus according to any one of claims 19 to 32, wherein

the obtaining module is specifically configured to obtain information about a point cloud corresponding to the first environment, wherein the information about the point cloud corresponding to the first environment indicates location information of a point in the point cloud corresponding to the first environment; and the obtaining module is specifically configured to obtain, based on the information about the point cloud corresponding to the first environment, the grid map corresponding to the first environment.

34. The positioning apparatus according to claim 33, wherein the information about the point cloud corresponding to the first environment further indicates reflection strength of the point in the point cloud corresponding to the first environment.

35. The positioning apparatus according to any one of claims 19 to 34, wherein

the obtaining module is specifically configured to obtain information about a point cloud corresponding to the second environment, wherein the information about the point cloud corresponding to the second environment indicates location information of a point in the point cloud corresponding to the second environment; and
the obtaining module is further specifically configured to obtain, based on the information about the point cloud corresponding to the second environment, the local grid corresponding to the second environment.

36. The positioning apparatus according to claim 35, wherein the information about the point cloud corresponding to the second environment further indicates reflection strength of the point in the point cloud corresponding to the second environment.

37. A positioning apparatus, comprising a processor, wherein the processor is coupled to a memory, and the memory is configured to store a program or instructions; and when the program or the instructions are executed by the processor, the apparatus is enabled to perform the method according to any one of claims 1 to 18.

38. A computer-readable storage medium, wherein the computer-readable storage medium stores a computer program or instructions; and when the computer program or the instructions are executed, a computer is enabled to perform the method according to any one of claims 1 to 18.

10

| Positioning apparatus | 101
| --- |

| Sensing apparatus | 102

FIG. 1A

11

111

Positioning apparatus

| Positioning module | 1111

| Sensing module | 1112

FIG. 1B

20

201    205    203

Processor | Processor |    | |
| CPU 0 |    | CPU 0 |    | |
| CPU 1 |    | CPU 1 |    Memory

Communication line
202

204

Communication
interface

FIG. 2

| A positioning apparatus obtains a grid map corresponding to a first environment | S301 |

| The positioning apparatus obtains a local grid corresponding to a second environment | S302 |

| The positioning apparatus obtains a first matching probability | S303 |

| The positioning apparatus determines a location of a to-be-positioned apparatus based on the first matching probability | S304 |

FIG. 3

First grid

401

402

Second grid

FIG. 4

A positioning apparatus obtains a grid map corresponding to a first environment — S301

The positioning apparatus obtains a local grid corresponding to a second environment — S302

The positioning apparatus predicts, based on pose information of a to-be-positioned apparatus at a first moment and a first movement parameter of the to-be-positioned apparatus, a first area corresponding to a location of the to-be-positioned apparatus at a second moment — S305

The positioning apparatus obtains a first matching probability of a location — S303

The positioning apparatus determines the location of the to-be-positioned apparatus based on the first matching probability — S304

FIG. 5

FIG. 6

First grid

Grid map

Local grid

Second grid

Pose of a to-be-
positioned apparatus
at a first moment

Predicted location of the
to-be-positioned apparatus
at a second moment

First area

FIG. 7

EP 4 404 018 A1

A positioning apparatus obtains a grid map corresponding to a first environment ⟶ S301

The positioning apparatus obtains a local grid corresponding to a second environment ⟶ S302

The positioning apparatus obtains a first matching probability ⟶ S303

The positioning apparatus determines a location of a to-be-positioned apparatus based on the first matching probability ⟶ S304

The positioning apparatus obtains a second matching probability ⟶ S306

The positioning apparatus determines an orientation angle of the to-be-positioned apparatus based on the second matching probability ⟶ S307

FIG. 8

FIG. 9

A positioning apparatus obtains information about a point cloud corresponding to a first environment — S3011

The positioning apparatus obtains, based on the information about the point cloud corresponding to the first environment, a grid map corresponding to the first environment — S3012

The positioning apparatus obtains a local grid corresponding to a second environment — S302

The positioning apparatus obtains a first matching probability — S303

The positioning apparatus determines a location of a to-be-positioned apparatus based on the first matching probability — S304

FIG. 10

A positioning apparatus obtains a grid map corresponding to a first environment — S301

The positioning apparatus obtains information about a point cloud corresponding to a second environment — S3021

The positioning apparatus obtains, based on the information about the point cloud corresponding to the second environment, a local grid corresponding to the second environment — S3022

The positioning apparatus obtains a first matching probability — S303

The positioning apparatus determines a location of a to-be-positioned apparatus based on the first matching probability — S304

FIG. 11

Actual location of a to-be-positioned apparatus

Location, of the to-be-positioned apparatus, that is determined in Method 1

Location, of the to-be-positioned apparatus, that is determined in Method 1

Point cloud map

Grid map

Location, of the to-be-positioned apparatus, that is determined in Method 4

FIG. 12

Positioning apparatus 130

Obtaining module — 1301

Processing module — 1302

FIG. 13

| INTERNATIONAL SEARCH REPORT | International application No. |
|---|---|
| | **PCT/CN2021/124206** |

**A. CLASSIFICATION OF SUBJECT MATTER**

G05D 1/02(2020.01)i

According to International Patent Classification (IPC) or to both national classification and IPC

**B. FIELDS SEARCHED**

Minimum documentation searched (classification system followed by classification symbols)

G05D1; G01C21; B60W40

Documentation searched other than minimum documentation to the extent that such documents are included in the fields searched

Electronic data base consulted during the international search (name of data base and, where practicable, search terms used)

WPI, EPODOC, CNPAT, CNKI: 华为, 定位, 自动驾驶, 无人驾驶, 栅格, 网格, 局部, 全局, 地图, 概率, 匹配, 强度, 高度, 语义, 偏差, 方差, 点云; locat+, position+, auto w driv+, map, grid, match, degree, hight, possibility, probability, deviat+

**C. DOCUMENTS CONSIDERED TO BE RELEVANT**

| Category* | Citation of document, with indication, where appropriate, of the relevant passages | Relevant to claim No. |
|---|---|---|
| X | CN 110967011 A (PLUSAI, INC.) 07 April 2020 (2020-04-07)<br>description, paragraphs 107-293, and figures 1-6 | 1-38 |
| A | CN 109781119 A (BAIDU ONLINE NETWORK TECHNOLOGY (BEIJING) CO., LTD.) 21 May 2019 (2019-05-21)<br>entire document | 1-38 |
| A | CN 112867977 A (HUAWEI TECHNOLOGIES CO., LTD.) 28 May 2021 (2021-05-28)<br>entire document | 1-38 |
| A | CN 110221616 A (SUZHOU AUTOMOTIVE RESEARCH INSTITUTE, TSINGHUA UNIVERSITY (WUJIANG)) 10 September 2019 (2019-09-10)<br>entire document | 1-38 |
| A | CN 112836698 A (BEIJING ZONGMU ANCHI INTELLIGENT TECHNOLOGY CO., LTD. et al.) 25 May 2021 (2021-05-25)<br>entire document | 1-38 |
| A | CN 113011517 A (SHANGHAI SENSETIME LINGANG INTELLIGENT TECHNOLOGY CO., LTD.) 22 June 2021 (2021-06-22)<br>entire document | 1-38 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 April 2022** | **25 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/124206**

| C. | DOCUMENTS CONSIDERED TO BE RELEVANT | |
|---|---|---|
| Category* | Citation of document, with indication, where appropriate, of the relevant passages | Relevant to claim No. |
| A | US 2019232487 A1 (ROBERT BOSCH G.M.B.H.) 01 August 2019 (2019-08-01) entire document | 1-38 |

Form PCT/ISA/210 (second sheet) (January 2015)

**INTERNATIONAL SEARCH REPORT**
Information on patent family members

International application No.

**PCT/CN2021/124206**

| Patent document cited in search report | | | Publication date (day/month/year) | Patent family member(s) | | | Publication date (day/month/year) |
|---|---|---|---|---|---|---|---|
| CN | 110967011 | A | 07 April 2020 | | None | | |
| CN | 109781119 | A | 21 May 2019 | US | 2019146062 | A1 | 16 May 2019 |
| | | | | US | 10705188 | B2 | 07 July 2020 |
| | | | | CN | 109781119 | B | 21 January 2020 |
| CN | 112867977 | A | 28 May 2021 | | None | | |
| CN | 110221616 | A | 10 September 2019 | | None | | |
| CN | 112836698 | A | 25 May 2021 | | None | | |
| CN | 113011517 | A | 22 June 2021 | | None | | |
| US | 2019232487 | A1 | 01 August 2019 | CN | 110111359 | A | 09 August 2019 |
| | | | | DE | 102018201570 | A1 | 01 August 2019 |
| | | | | US | 11253997 | B2 | 22 February 2022 |

Form PCT/ISA/210 (patent family annex) (January 2015)